# EUROPEAN PATENT APPLICATION

(11) **EP 4 586 737 A1**
(43) Date of publication of application: **16.07.2025**
(21) Application number: 23880004.9
(22) Date of filing: 31.08.2023
(51) Int. Cl.: H04W 76/14, H04W 4/80, H04W 76/15, H04W 76/23, H04W 8/00, H04R 3/12

(54) **ELECTRONIC DEVICE FOR COMMUNICATING THROUGH BLUETOOTH CONNECTION AND OPERATION METHOD THEREOF**

(30) Priority: 21.10.2022 KR 20220136892; 21.11.2022 KR 20220156319
(71) Applicant: Samsung Electronics Co., Ltd., Suwon-si, Gyeonggi-do 16677 (KR)
(72) Inventor: RYU, Kyusang, Suwon-si Gyeonggi-do 16677 (KR); CHEONG, Gupil, Suwon-si Gyeonggi-do 16677 (KR); KANG, Doosuk, Suwon-si Gyeonggi-do 16677 (KR); CHOI, Sungjun, Suwon-si Gyeonggi-do 16677 (KR)
(74) Representative: Appleyard Lees IP LLP
(86) International application number: PCT/KR2023/012957
(87) International publication number: WO 2024/085424

(57) **Abstract**

Disclosed is an electronic device comprising a communication circuit and at least one processor functionally connected to the communication circuit. The at least one processor may be configured to: establish a control communication link with an external electronic device; establish, with the external electronic device, a first audio communication link using first parameters of a first service type by using the control communication link; transmit first audio data to the external electronic device through the first audio communication link by using the first parameters; determine second parameters of a second service type and a start time point to apply the second parameters, through the control communication link while the first audio communication link is maintained; and transmit second audio data to the external electronic device through a second audio communication link by using the second parameters after the start time point.

## Description

### [Technical Field]

Various embodiments of the disclosure relate to an electronic device for communicating through a Bluetooth connection and a method of operating the same.

### [Background Art]

Bluetooth communication technology may provide a short-range wireless communication technology that allows electronic devices to be connected to each other for exchange of data or information. The Bluetooth communication technology may include Bluetooth legacy (or classic) communication technology or Bluetooth low energy (BLE) communication technology.

An electronic device may detect one or more external electronic devices around it, establish a Bluetooth connection with each of the detected external electronic devices, and use one or more services through the Bluetooth connection. In an embodiment, the electronic device may be a personal computer (PC) or a smartphone, and the external electronic device may include at least one of a speaker, a mouse, a keyboard, a monitor, a tablet computer, or another PC.

The electronic device may discover the external electronic device by receiving a BLE advertising packet broadcast by the external electronic device through a BLE-based scan operation, establish a Bluetooth connection (e.g., a BLE connection) with the discovered external electronic device, and provide a service (e.g., transmit or receive data packets) to the external electronic device through the Bluetooth connection.

When the external electronic device accepts a connection request, the electronic device may obtain service list information from the external electronic device by performing a service search operation (e.g., service discovery). The electronic device may select a desired service based on the obtained service list information, and perform an operation of transmitting and/or receiving data packets for the selected service.

### [Detailed Description of the Invention]

### [Technical Solution]

An electronic device and a method of operating the same according to embodiments of the disclosure may provide an audio device to an external electronic device through a Bluetooth connection.

An electronic device and a method of operating the same according to embodiments of the disclosure may switch a service type, while providing an audio device to an external electronic device through a Bluetooth connection.

An electronic device according to an embodiment may include a communication circuit and at least one processor functionally connected to the communication circuit. The at least one processor may be configured to establish a control communication link with an external electronic device. The at least one processor may be configured to establish a first audio communication link using first parameters of a first service type with the external electronic device, using the control communication link. The at least one processor may be configured to transmit first audio data to the external electronic device through the first audio communication link, using the first parameters. The at least one processor may be configured to determine second parameters of a second service type and a start time for applying the second parameters through the control communication link, while the first audio communication link is maintained. The at least one processor may be configured to transmit second audio data to the external electronic device through the second audio communication link, using the second parameters after the start time.

An electronic device according to an embodiment may include a communication circuit and at least one processor functionally connected to the communication circuit. The at least one processor may be configured to establish a control communication link with an external electronic device. The at least one processor may be configured to establish a first audio communication link using first parameters of a first service type with the external electronic device, using the control communication link. The at least one processor may be configured to receive first audio data from the external electronic device through the first audio communication link, using the first parameters. The at least one processor may be configured to obtain second parameters of a second service type and a start time for applying the second parameters from the external electronic device through the control communication link, while the first audio communication link is maintained. The at least one processor may be configured to receive second audio data from the external electronic device through the second audio communication link, using the second parameters after the start time.

A method of operating an electronic device according to an embodiment may include establishing a control communication link with an external electronic device. The method may include establishing a first audio communication link using first parameters of a first service type with the external electronic device, using the control communication link. The method may include transmitting first audio data to the external electronic device through the first audio communication link, using the first parameters. The method may include determining second parameters of a second service type and a start time for applying the second parameters through the control communication link, while the first audio communication link is maintained. The method may include transmitting second audio data to the external electronic device through the second audio communication link, using the second parameters after the start time.

A method of operating an electronic device according to an embodiment may include establishing a control communication link with an external electronic device. The method may include establishing a first audio communication link using first parameters of a first service type with the external electronic device, using the control communication link. The method may include receiving first audio data from the external electronic device through the first audio communication link, using the first parameters. The method may include obtaining second parameters of a second service type and a start time for applying the second parameters from the external electronic device through the control communication link, while the first audio communication link is maintained. The method may include receiving second audio data from the external electronic device through the second audio communication link, using the second parameters after the start time.

In a non-transitory computer-readable storage medium storing at least one program according to an embodiment, the at least one program, when executed by at least one processor of an electronic device, may enable the electronic device to establish a control communication link with an external electronic device, establish a first audio communication link using first parameters of a first service type with the external electronic device, using the control communication link, transmit first audio data to the external electronic device through the first audio communication link, using the first parameters, determine second parameters of a second service type and a start time for applying the second parameters through the control communication link, while the first audio communication link is maintained, and transmit second audio data to the external electronic device through the second audio communication link, using the second parameters after the start time.

In a non-transitory computer-readable storage medium storing at least one program according to an embodiment, the at least one program, when executed by at least one processor of an electronic device, may enable the electronic device to establish a control communication link with an external electronic device, establish a first audio communication link using first parameters of a first service type with the external electronic device, using the control communication link, receive first audio data from the external electronic device through the first audio communication link, using the first parameters, obtain second parameters of a second service type and a start time for applying the second parameters from the external electronic device through the control communication link, while the first audio communication link is maintained, and receive second audio data from the external electronic device through the second audio communication link, using the second parameters after the start time.

### [Brief Description of Drawings]

FIG. 1 is a block diagram illustrating an electronic device in a network environment according to various embodiments.
FIG. 2 is a diagram illustrating an example of Bluetooth-based connections between electronic devices according to an embodiment.
FIG. 3 is a diagram illustrating a configuration of an external electronic device supporting Bluetooth communication according to an embodiment.
FIG. 4 is a diagram illustrating a Bluetooth LE (BLE) scan operation according to an embodiment.
FIG. 5 is a diagram illustrating an example of connections between Bluetooth devices according to an embodiment.
FIG. 6 is a diagram illustrating an example of a BLE communication connection according to an embodiment.
FIG. 7 is a signal flow diagram illustrating an example of an operation procedure for establishing a CIS link according to an embodiment.
FIG. 8 is a diagram illustrating an example of control data configured for CIS communication according to an embodiment.
FIG. 9 is a timing diagram illustrating an example of CIS communication according to an embodiment.
FIG. 10 is a diagram illustrating an example of a CIS event according to an embodiment.
FIG. 11 is a diagram illustrating an example of CIS transmission according to an embodiment.
FIG. 12 is a diagram illustrating another example of CIS transmission according to an embodiment.
FIG. 13 is a diagram illustrating CISs arranged in a sequential manner according to an embodiment.
FIG. 14 is a diagram illustrating CISs arranged in an interleaved manner according to an embodiment.
FIG. 15 is a diagram illustrating a CIG event layout including three CISs according to an embodiment.
FIG. 16 illustrates an ASE characteristic format according to an embodiment.
FIG. 17 is a diagram illustrating source ASE states according to an embodiment.
FIG. 18 is a diagram illustrating sink ASE states according to an embodiment.
FIGS. 19A and 19B are flowcharts illustrating a procedure of providing an audio service by an electronic device according to an embodiment.
FIGS. 20A and 20B are flowcharts illustrating a procedure of receiving an audio service by an external electronic device according to an embodiment.
FIG. 21 is a diagram illustrating a procedure of preparing an audio service according to an embodiment.
FIGS. 22A, 22B and 22C illustrate various examples of a user interface displayed on an electronic device 101 according to an embodiment.
FIG. 23 is a diagram illustrating a procedure of communicating through an audio communication link by an electronic device according to an embodiment.
FIG. 24 illustrates an example of ASE information provided by an external electronic device according to an embodiment.
FIG. 25 is a signal flowchart illustrating an ASE control operation according to an embodiment.
FIG. 26A illustrates parameters for codec configuration according to an embodiment.
FIG. 26B illustrates parameters for QoS configuration according to an embodiment.
FIG. 26C illustrates parameters for ASE enabling according to an embodiment.
FIG. 27 is a diagram illustrating a first CIS link for a first service type according to an embodiment.
FIG. 28 is a diagram illustrating an operation time of a new CIS link for a second service type according to an embodiment.
FIG. 29 is a diagram illustrating a start time of a second service type, when a first CIS link is reused according to an embodiment.
FIGS. 30 and 31 are diagrams illustrating a start time of a second service type, when a second CIS link is created according to an embodiment.

### [Mode for Carrying out the Invention]

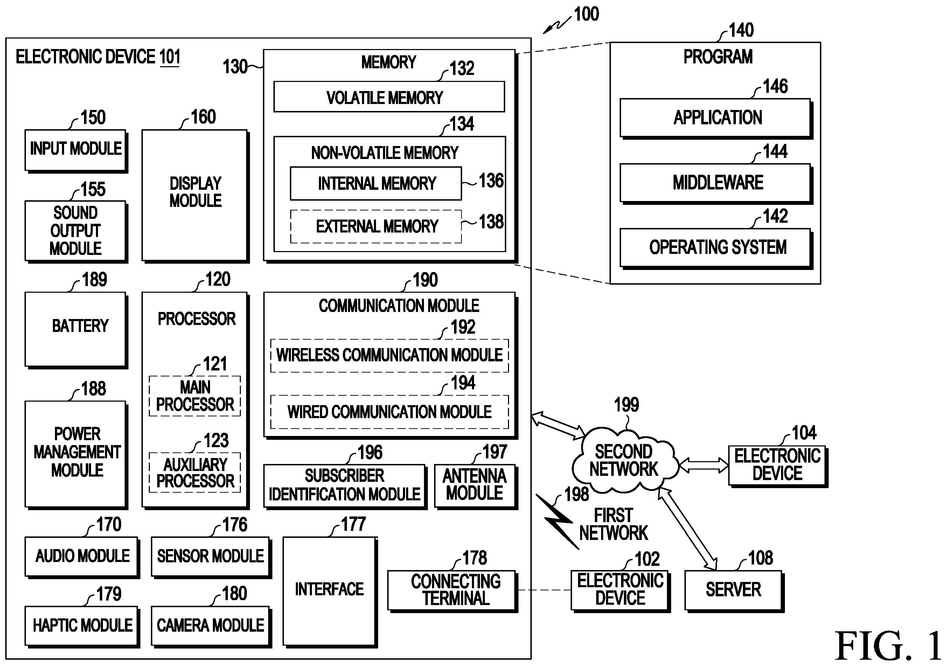

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120) or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the strength of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beamforming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form an mmWave antenna module. According to an embodiment, the mmWave antenna module may include a printed circuit board, a RFIC disposed on a first surface (e.g., the bottom surface) of the printed circuit board, or adjacent to the first surface and capable of supporting a specified high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the specified high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

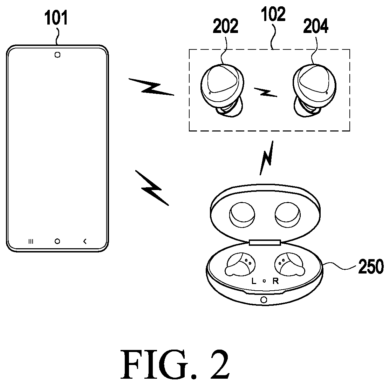

FIG. 2 is a diagram illustrating connections between electronic devices based on a Bluetooth scheme according to an embodiment.

Referring to FIG. 2, the external electronic device 102 (e.g., an ear-wearable device) may be wirelessly connected to an electronic device (e.g., the electronic device 101). In an embodiment, the electronic device 101 may be a smartphone, a tablet, or a laptop computer. In an embodiment, the external electronic device 102 may be a split type ear-wearable device and include at least one of a first external electronic device 202 (e.g., a left ear bud) or a second external electronic device 204 (e.g., a right ear bud).

Although the first external electronic device 202 and the second external electronic device 204 are shown as a pair of earbuds in an embodiment, the first external electronic device 202 and the second external electronic device 204 may include not only earbuds but also any devices that may operate as a pair. In an embodiment, the first external electronic device 202 and the second external electronic device 204 may be implemented to include the same or similar components.

According to an embodiment, the electronic device 101 may establish a connection (e.g., a communication link) with at least one of the first external electronic device 202 or the second external electronic device 204, and transmit and/or receive data to and/or from it. For example, although the electronic device 101 may establish a communication link with at least one of the first external electronic device 202 or the second external electronic device 204 based on Wi-Fi or Bluetooth (e.g., Bluetooth classic or BLE), the scheme in which the electronic device 101 establishes a communication link with the first external electronic device 202 and the second external electronic device 204 is not limited to at least one of Wi-Fi and/or Bluetooth.

In an embodiment, the electronic device 101 may establish a communication link (e.g., a control communication link or an audio communication link) with only one of the first external electronic device 202 and the second external electronic device 204, or may establish a separate communication link (e.g., a control communication link or an audio communication link) with each of the first external electronic device 202 and the second external electronic device 204.

In an embodiment, the electronic device 101 may operate as a central (or a master, a primary device, or a main device), and the external electronic device 102 (e.g., at least one of the first external electronic device 202 or the second external electronic device 204) may operate as a peripheral (or a slave or a secondary device). The electronic device 101 operating as the central may transmit data to the external electronic device (e.g., the first external electronic device 202 or the second external electronic device 204) operating as the peripheral. For example, when the electronic device 101 and the first external electronic device 202 establish a communication link with each other, the electronic device 101 may be selected as a central, and the first external electronic device 202 may be selected as a peripheral. In the case of an audio service, the electronic device 101 operating as the central may be a source electronic device, and the external electronic device (e.g., the first external electronic device 202 or the second external electronic device 204) operating as the peripheral may be a sink electronic device.

In an embodiment, the first external electronic device 202 and the second external electronic device 204 may establish a communication link between each other based on at least one of Wi-Fi and/or Bluetooth. However, the scheme in which the first external electronic device 202 and the second external electronic device 204 establish a communication link is not limited to at least one of Wi-Fi and/or Bluetooth.

In an embodiment, one of the first external electronic device 202 and the second external electronic device 204 may operate as a central (or primary device), and the other may operate as a peripheral (or secondary device). The electronic device (e.g., the first external electronic device 202) operating as the central may transmit data (e.g., a reception acknowledgment signal or relay data) to the electronic device (e.g., the second external electronic device 204) operating as the peripheral. For example, when the first external electronic device 202 and the second external electronic device 204 establish a communication link with each other, one of the first external electronic device 202 and the second external electronic device 204 may be randomly selected as a central, and the other may be selected as a peripheral.

The first external electronic device 202 and the second external electronic device 204 may communicate directly or indirectly with an external electronic device 250. In an embodiment, the external electronic device 250 may be an ear buds case device or cradle device that stores and charges the first external electronic device 202 and the second external electronic device 204.

According to an embodiment, the external electronic device 250 may establish a connection (e.g., a communication link) with at least one of the electronic device 101, the first external electronic device 202, or the second external electronic device 204, and transmit and/or receive data to and/or from it. For example, the external electronic device 250 may establish a communication link with at least one of the electronic device 101, the first external electronic device 202, or the second external electronic device 204 based on Wi-Fi or Bluetooth (e.g., Bluetooth classic or BLE). However, the scheme in which the external electronic device 250 establishes a communication link with the electronic device 101, the first external electronic device 202, or the second external electronic device 204 is not limited to at least one of Wi-Fi and/or Bluetooth.

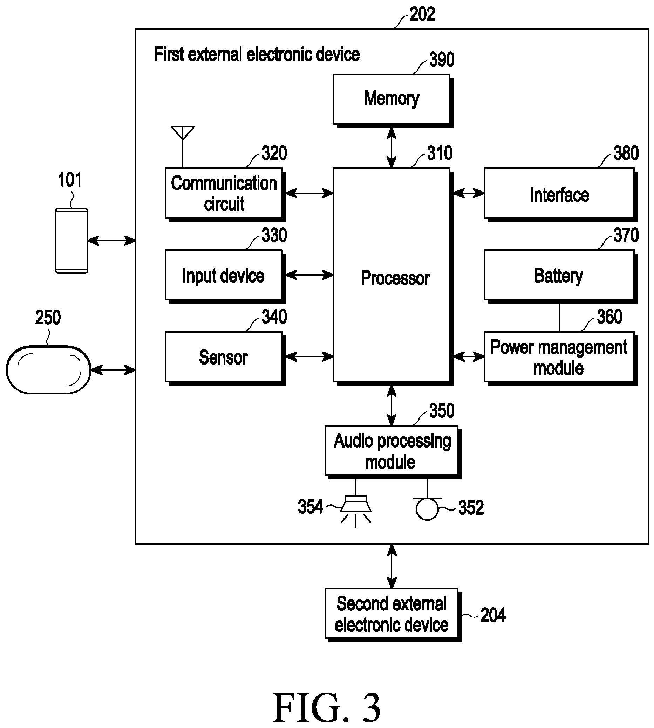

FIG. 3 is a diagram illustrating a configuration of an external electronic device supporting Bluetooth communication according to an embodiment.

Referring to FIG. 3, the electronic device 101 may be wirelessly connected to at least one of the first external electronic device 202 or the second external electronic device 204. The electronic device 101 may be implemented as, for example, a smartphone, and may also be implemented as various types of devices (e.g., a notebook computer including a standard notebook, an ultrabook, a netbook, and a tab book, a laptop computer, a tablet computer, or a desktop computer) without being limited to those described and/or illustrated. The electronic device 101 may be implemented as illustrated in FIG. 1, and thus include at least some of the components (e.g., various modules) illustrated in FIG. 1. Therefore, a redundant description is avoided.

Although the first external electronic device 202 and the second external electronic device 204 may be implemented as wireless earbuds, they may also be implemented as various types of devices (e.g., a smart watch, a head-mounted display device, or devices for measuring biosignals (e.g., an electrocardiogram patch)) that support an audio service described below, without being limited to those described and/or illustrated. According to an embodiment, when the external electronic devices 202 and 204 are wireless earbuds, the first external electronic device 202 and the second external electronic device 204 may be a pair of devices (e.g., a left earbud and a right earbud). According to an embodiment, the first external electronic device 202 and the second external electronic device 204 may be implemented to include the same or similar components.

According to an embodiment, the electronic device 101 may establish a communication connection with at least one of the external electronic devices 202 and 204 and transmit and/or receive data to and/or from it. For example, each of the external electronic devices 202 and 204 may establish a communication connection with the electronic device 101, using a communication circuit (e.g., a communication circuit 320) by (e.g., supporting) device to device (D2D) communication such as Wi-Fi direct or Bluetooth, to which the disclosure is not limited. They may communicate with each other using various types of communication (e.g., a communication scheme such as Wi-Fi using an access point (AP), a cellular communication scheme using a base station, or a wired communication scheme).

In an embodiment, one of the first external electronic device 202 and the second external electronic device 204 may be a primary device (or a master device or main device), the other device may be a secondary device (or a slave device or sub-device), and the primary device (or the main device) may transmit data to the secondary device. For example, when the first external electronic device 202 and the second external electronic device 204 establish a communication connection with each other, one of the first external electronic device 202 and the second external electronic device 204 may be randomly selected as the primary device, and the other device may be selected as the secondary device. In an embodiment, when the first external electronic device 202 and the second external electronic device 204 establish a communication connection with each other, the device that is first detected as being worn on the human body (e.g., a value indicating wearing is detected using a sensor for detecting wearing (e.g., a proximity sensor, a touch sensor, a 6-axis tilt sensor, or a 9-axis sensor)) may be selected as the primary device, and the other device may be selected as the secondary device.

In an embodiment, the primary device may transmit data (e.g., control data and/or audio data) received from the electronic device 101 to the secondary device. For example, the first external electronic device 202 serving as the primary device may output audio to a speaker 354 based on the audio data received from the electronic device 101, and transmit the audio data to the second external electronic device 204 serving as the secondary device. In an embodiment, the second external electronic device 204 serving as the secondary device may receive the audio data transmitted from the electronic device 101 to the primary device (e.g., the first external electronic device 202) through sniffing, based on connection information provided from the primary device (e.g., the first external electronic device 202).

In an embodiment, the first external electronic device 202 serving as the primary device may transmit data (e.g., audio data and/or control data) received from the second external electronic device 204 serving as the secondary device to the electronic device 101. For example, when a touch event occurs in the second external electronic device 204 serving as the secondary device, the first external electronic device 202 serving as the primary device may transmit control data including information about the generated touch event to the electronic device 101. However, without being limited to what has been described, the secondary device (e.g., the second external electronic device 204) and the electronic device 101 establish a communication connection with each other, and thus, data transmission and/or reception may be directly performed between the secondary device and the electronic device 101, as described above.

In an embodiment, the first external electronic device 202 may include a component identical to or similar to at least one of the components (e.g., modules) of the electronic device 101 illustrated in FIG. 1. The first external electronic device 202 may include a processor 310 (e.g., the processor 120) of FIG. 1), the communication circuit 320 (e.g., the communication module 190 of FIG. 1), an input device 330 (e.g., the input module 150 of FIG. 1), a sensor 340 (e.g., the sensor module 176 of FIG. 1), an audio processing module 350 (e.g., the audio module 170 of FIG. 1), a power management module 360 (e.g., the power management module 188 of FIG. 1), a battery 370 (e.g., the battery 189 of FIG. 1), an interface 380 (e.g., the interface 177 of FIG. 1), and memory 390 (e.g., the memory 130 of FIG. 1).

According to an embodiment, the communication circuit 320 may include at least one of a wireless communication module (e.g., a Bluetooth communication module, a cellular communication module, a Wi-Fi (wireless-fidelity) communication module, a near field communication (NFC) communication module, or a global navigation satellite system (GNSS) communication module) or a wired communication module (e.g., a local area network (LAN) communication module or a power line communication (PLC) communication module). The Bluetooth communication module may support at least one communication connection (e.g., communication link) by, for example, Bluetooth legacy communication and/or BLE communication.

The communication circuit 320 may communicate directly or indirectly with at least one of the electronic device 101 (e.g., a smartphone), the external electronic device 250 (e.g., a charging device such as a cradle), or the second external electronic device 204 (e.g., a secondary earbud) through a first network (e.g., the first network 198 of FIG. 1), using at least one communication module included therein. The second external electronic device 204 may be configured as a pair with the first external electronic device 202. The communication circuit 320 may operate independently of the processor 310 and include one or more communication processors supporting wired or wireless communication.

According to an embodiment, the communication circuit 320 may be connected to one or more antennas capable of transmitting or receiving signals or information to or from another electronic device (e.g., the electronic device 101, the second external electronic device 204, or the external electronic device 250 (e.g., a cradle device)). According to an embodiment, at least one antenna suitable for a communication scheme used in a communication network, such as a first network (e.g., the first network 198 of FIG. 1) or a second network (e.g., the second network 199 of FIG. 2), may be selected from among the plurality of antennas, for example, by the communication circuit 320. The signals or information may be transmitted or received between the communication circuit 320 and the other electronic device through the selected at least one antenna.

According to an embodiment, the input device 330 may be configured to generate various input signals that may be used in an operation of the first external electronic device 202. The input device 330 may include at least one of a touch pad, a touch panel, or a button.

According to an embodiment, the input device 330 may generate a user input regarding on or off of the first external electronic device 202. According to an embodiment, the input device 330 may receive a user input for a communication connection between the first external electronic device 202 and the second external electronic device 204. According to an embodiment, the input device 330 may receive a user input associated with audio data (or audio content). For example, the user input may be associated with the function of play start, play pause, play stop, play speed control, play volume control, or mute.

According to an embodiment, the sensor 340 may measure or determine the position or operating state of the first external electronic device 202. The sensor 340 may convert the measured or determined information into an electrical signal. The sensor 340 may include, for example, at least one of a magnetic sensor, an acceleration sensor, a gyro sensor, a geomagnetic sensor, a proximity sensor, a gesture sensor, a grip sensor, a biometric sensor, or an optical sensor.

According to an embodiment, the processor 310 may detect data (e.g., audio data) from data packets received from the electronic device 101, process the detected data through the audio processing module 350, and output the processed data to the speaker 354. The audio processing module 350 may support an audio data collection function and reproduce the collected audio data.

According to an embodiment, the audio processing module 350 may include an audio decoder (not shown) and a D/A converter (not shown). The audio decoder may convert audio data stored in the memory 390 or received from the electronic device 101 through the communication circuit 320 into a digital audio signal. The D/A converter may convert the digital audio signal converted by the audio decoder into an analog audio signal. According to an embodiment, the audio decoder may convert audio data received from the electronic device 101 through the communication circuit 320 and stored in the memory 390 into a digital audio signal. The speaker 354 may output the analog audio signal converted by the D/A converter.

According to an embodiment, the audio processing module 350 may include an A/D converter (not shown). The A/D converter may convert an analog voice signal transmitted through a microphone 352 (hereinafter, referred to as a mike) into a digital voice signal. The microphone 352 may include at least one air conduction microphone and/or at least one bone conduction microphone, for detecting voice and/or sound.

According to an embodiment, the audio processing module 350 may reproduce various audio data configured in an operation of operating the first external electronic device 202. For example, the processor 310 may be designed to detect attachment or detachment of the first external electronic device 202 to or from the user's ear through the sensor 340 and reproduce audio data related to sound effects or guidance sounds through the audio processing module 350. The output of the sound effects or guidance sounds may be skipped according to the user's settings or a designer's intention.

According to an embodiment, the memory 390 may store various data used by at least one component (e.g., the processor 310 or the sensor 340) of the first external electronic device 202. The data may include, for example, input data or output data for software and commands related to the software. The memory 390 may include volatile memory or non-volatile memory.

According to an embodiment, the power management module 360 may manage power supplied to the first external electronic device 202. According to an embodiment, the power management module 360 may be implemented as at least a portion of a power management integrated circuit (PMIC), for example. According to an embodiment, the power management module 360 may include a battery charging module. According to an embodiment, when another electronic device (e.g., one of the electronic device 101, the second external electronic device 204, or another electronic device) is electrically connected (wirelessly or wiredly) to the first external electronic device 202, the power management module 360 may receive power from the other electronic device and charge the battery 370.

According to an embodiment, the battery 370 may supply power to at least one component of the first external electronic device 202. The battery 370 may include, for example, a rechargeable battery. According to an embodiment, when the first external electronic device 202 is mounted within a cradle device (e.g., the external electronic device 250), the first external electronic device 202 may charge the battery 370 to a specified charge level, and then the external electronic device 202 may be powered on or at least a portion of the communication circuit 320 may be turned on.

According to an embodiment, the interface 380 may support one or more specified protocols available for direct (e.g., wired) connection between the first external electronic device 202 and the electronic device 101, the second external electronic device 204, a cradle device (e.g., the external electronic device 250), or another electronic device. The interface 380 may include, for example, at least one of a high definition multimedia interface (HDMI), a USB interface, an SD card interface, a power line communication (PLC) interface, or an audio interface. According to an embodiment, the interface 380 may include at least one connection port for establishing a physical connection with the cradle device (e.g., the external electronic device 250).

According to an embodiment, the processor 310 may execute software to control at least one other component (e.g., a hardware or software component) of the first external electronic device 202 connected to the processor 310, and perform various data processing or operations. According to an embodiment, as at least part of the data processing or operations, the processor 310 may load a command or data received from another component (e.g., the sensor 340 or the communication circuit 320) into the volatile memory 390, process a command or data stored in the volatile memory 390, and store the resulting data in the non-volatile memory.

According to an embodiment, the processor 310 may establish a communication connection with the electronic device 101 through the communication circuit 320, and receive data (e.g., audio data) from the electronic device 101 through the established communication connection. According to an embodiment, the processor 310 may transmit the data received from the electronic device 101 to the second external electronic device 204 through the communication circuit 320. According to an embodiment, the processor 310 may perform operations of the first external electronic device 202 to be described below. According to an embodiment, the processor 310 may include a physical layer, a link layer, a host, and/or an application layer for performing Bluetooth communication.

According to embodiments of the disclosure, the first external electronic device 202 may further include various modules depending on its provision form. Although it is not possible to list all of them because the modifications are very diverse according to the convergence trend of digital devices, components equivalent to the above-mentioned components may be further included in the first external electronic device 202. Further, it is obvious that a specific component may be excluded or replaced with another component among the above components of the first external electronic device 202 depending on the provision form of the first external electronic device 202 according to embodiments. This will be easily understood by those skilled in the art.

According to embodiments, the second external electronic device 204 configured as a pair with the first external electronic device 202 may include components identical to or similar to those included in the first external electronic device 202, and perform all or some of the operations of the first external electronic device 202 described below with reference to the drawings.

In an embodiment, the electronic device 101 may discover at least one of the external electronic devices 202 and 204 through a BLE scan and establish a BLE connection with the discovered device. At least one of the external electronic devices 202 and 204 may perform BLE advertisement to be discovered by the electronic device 101, and establish a BLE connection with the electronic device 101.

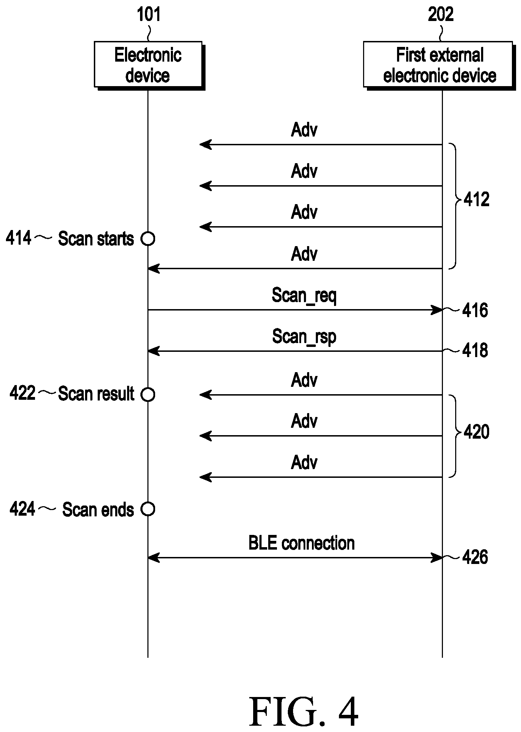

FIG. 4 is a diagram illustrating a BLE scan operation according to an embodiment. Although an operation between the electronic device 101 and the first external electronic device 202 is described below, the following description may also be applied between the electronic device 101 and the second external electronic device 204.

Referring to FIG. 4, in operation 414, the electronic device 101 may start performing a scan operation to discover an adjacent Bluetooth device based on BLE. In operation 412, the first external electronic device 202 may periodically transmit (e.g., multicast or broadcast) an advertising packet "Adv" to be discovered by an adjacent Bluetooth device based on BLE. In an embodiment, the advertising packet may include advertising data, and the advertising data may provide information related to a connection (e.g., pairing) to the first external electronic device 202 and a user account to non-specific adjacent electronic devices (e.g., the electronic device 101) and other electronic devices (not shown). In an embodiment, the advertising packet may include at least one of identification information about the first external electronic device 202, user account information, information about whether the first external electronic device 202 is paired with another electronic device, a list of devices with which the first external electronic device 202 has previously been paired, information about devices that may be paired simultaneously, transmission power, a detection area, or information about a remaining battery level.

In an embodiment, the first external electronic device 202 may start an operation of transmitting the advertising packet, for example, in response to a user input for a pairing request. In an embodiment, the first external electronic device 202 may be kept in a cradle device (e.g., the third external electronic device 250), and may start transmitting the advertising packet when the cradle device is opened or the first external electronic device 202 is separated from the cradle device, while the first external electronic device 202 is kept in the cradle device. In an embodiment, the cradle device (e.g., the third external electronic device 250) may transmit an advertising packet on behalf of the first external electronic device 202. In an embodiment, the first external electronic device 202 may transmit the advertising packet according to a specified condition. In an embodiment, the first external electronic device 202 may start transmission of the advertising packet based on at least one of power supply, a specified time period, or a user input.

In an embodiment, the electronic device 101 may receive at least one of advertising packets broadcast from the first external electronic device 202 and output a user interface for connection to the first external electronic device 202 on the display. The electronic device 101 may provide the user interface according to various conditions based on information included in the received advertising packet. For example, the user interface may include at least one of an image corresponding to the first external electronic device 202, a user account, transmission power, or a remaining battery level.

In operation 416, the electronic device 101 may transmit a scan request packet (e.g., Scan_req) corresponding to the advertising packet received from the first external electronic device 202 to the first external electronic device 202. In operation 418, the first external electronic device 202 may transmit a scan response packet (e.g., Scan_rsp) corresponding to the scan request packet to the electronic device 101. In an embodiment, during and after the exchange of the scan request packet of operation 416 and the scan response packet of operation 418, the first external electronic device 202 may continue to periodically transmit the advertising packet in operation 420.

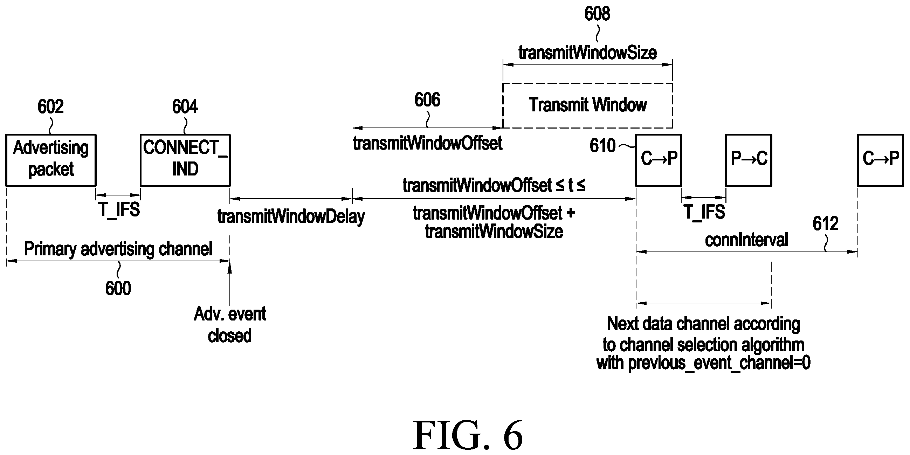

In operation 422, the electronic device 101 may generate a scan result (e.g., including a received signal strength indicator (RSSI)) according to the reception of the scan response packet. In an embodiment, the electronic device 101 may terminate the scan operation according to the reception of the scan response packet in operation 424. Alternatively, the electronic device 101 may continue to perform the scan operation. In operation 426, the electronic device 101 may establish a BLE communication link (e.g., an asynchronous connection-oriented link (ACL)) with the first external electronic device 202. In an embodiment, operation 426 may include transmitting CONNECT_IND 604 and a first packet 610 of FIG. 6.

The BLE communication link may include a plurality of LE physical channels, each of which may be optimized and used for different purposes, for example, an LE piconet physical channel, an LE advertising physical channel, an advertising periodic physical channel, and/or an LE isochronous physical channel. The LE piconet physical channel may be used for communication between connected devices and connected to a specific piconet. The LE advertising physical channel may be used to broadcast an advertisement to Bluetooth devices. The advertisement may be used to discover, connect, or transmit user data to a counterpart electronic device. The advertising periodic physical channel may be used to transmit user data to the counterpart electronic device at a specific interval through periodic advertisements. The LE isochronous physical channel may be used to transmit isochronous data between Bluetooth devices within an LE piconet, or to transmit isochronous data between unconnected Bluetooth devices.

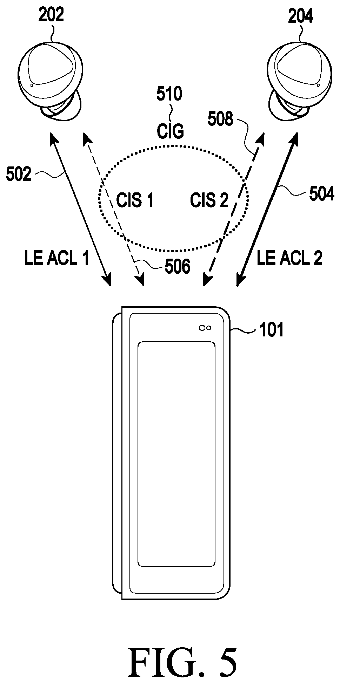

FIG. 5 is a diagram illustrating an example of connections between Bluetooth devices according to an embodiment.

Referring to FIG. 5, the electronic device 101 may detect the presence of the first external electronic device 202 and establish a first asynchronous connection-less (ACL) link 502 (hereinafter, referred to as ACL1 or LE ACL1) between them based on BLE. Further, the electronic device 101 may detect the presence of the second external electronic device 204 and establish a second ACL link 504 (hereinafter, referred to as ACL2 or LE ACL2) between the two devices based on BLE.

In an embodiment, the electronic device 101 may establish a first connected isochronous stream (CIS) link 506 (hereinafter, referred to as CIS1) using an isochronous physical channel by using the first ACL link 502 and exchange isochronous data (e.g., audio data) with the first external electronic device 202 through the first CIS link 506. Similarly, the electronic device 101 may establish a second CIS link 508 (hereinafter, referred to as CIS2) by using the second ACL link 504 and exchange isochronous data (e.g., audio data) with the second external electronic device 204 through the second CIS link 508. The first CIS link 506 and the second CIS link 508 may be included in a CIS group (CIG) 510.

In an embodiment, the first ACL link 502 may be a logical transmission used to exchange information required to establish or control the first CIS link 506 between the electronic device 101 and the first external electronic device 202. The first CIS link 506 may be used to communicate audio data between the electronic device 101 and the first external electronic device 202. In an embodiment, the electronic device 101 and the first external electronic device 202 may establish the first CIS link 506 based on information (e.g., communication parameters) obtained through the first ACL link 502. In an embodiment, the electronic device 101 and the first external electronic device 202 may exchange information (e.g., supported feature information and/or a PHY change policy) to be applied to control the first CIS link 506, through the first ACL link 502.

In an embodiment, the second external electronic device 204 may establish the second ACL link 504 and the second CIS link 508 with the electronic device 101 and perform operations identical to or similar to those of the first external electronic device 202. In an embodiment, the second external electronic device 204 may communicate with the electronic device 101 under the control of the first external electronic device 202.

FIG. 6 is a diagram illustrating an example of a BLE communication connection according to an embodiment.

Referring to FIG. 6, a primary advertising channel 600 may be used to transmit an advertising packet 602 and a CONNECT_IND message 604. There may be a time for inter frame space (T_IFS) between the advertising packet 602 and the CONNECT_IND message 604. The advertisement event may be terminated by the CONNECT_IND message 604. After the CONNECT_IND message 604, a link layer (LL) connection may be set up.

When a Bluetooth device (e.g., the electronic device 101, the first external electronic device 202, or the second external electronic device 204) establishes a communication link with a counterpart electronic device, it may set a connection interval (connInterval) 612 that means a communication period, and perform communication in each connection interval 612. In an embodiment, when the electronic device 101 receives the advertising packet 602 broadcast from the first external electronic device 202 on the primary advertising channel 600, it may request a BLE connection by transmitting the CONNECT_IND message 604 to the first external electronic device 202.

In an embodiment, upon receipt of the CONNECT_IND message 604, the first external electronic device 202 may operate as a peripheral device (e.g., slave role), and the electronic device 101 operating as a central device (e.g., master role) may calculate the start time of the connection interval 612 based on parameters transmitted through the CONNECT_IND message 604, such as transmitWindowOffset 606 and transmitWindowSize 608, and prepare to receive the first packet 610 to be transmitted from the first electronic device 302 in a central to peripheral (C-P) time period (e.g., including at least one slot) within the connection interval 612. Upon receipt of the first packet 610, the electronic device 101 may calculate an anchor point (AP) indicating the start time of the next connection interval, based on a time when the first packet 610 is received.

Electronic devices (e.g., the electronic device 101, the first external electronic device 202, and the second external electronic device 204) may support an audio service through BLE, and audio provided by the audio service through BLE may be referred to as BLE audio. Schemes of supporting an audio service through BLE audio may be divided into, for example, broadcast isochronous stream (BIS) and connected isochronous stream (CIS).

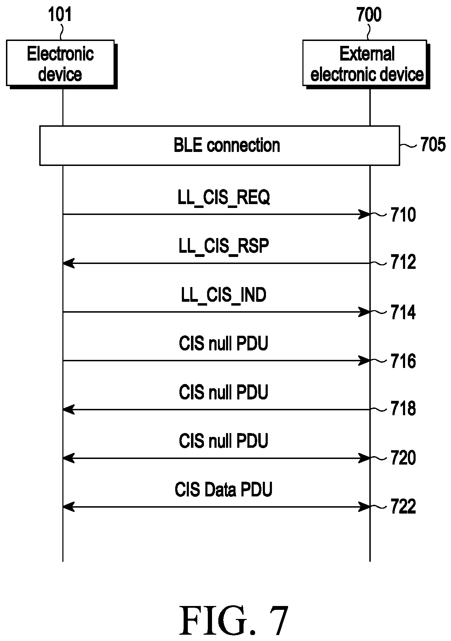

FIG. 7 is a signal flow diagram illustrating an example of an operation procedure for establishing a CIS link according to an embodiment.

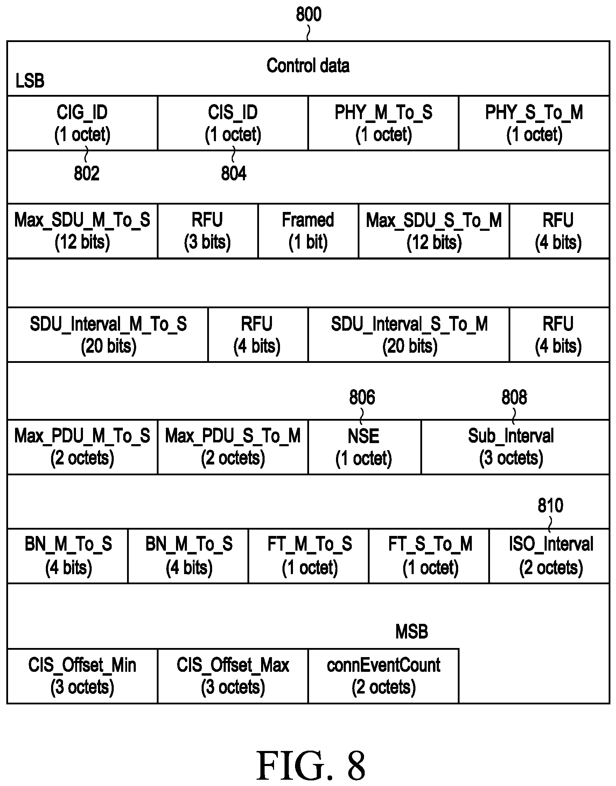

Referring to FIG. 7, in operation 705, an electronic device (e.g., a CIS source electronic device or the electronic device 101) may have a BLE connection (e.g., the first ACL link 502) with an external electronic device 700 (e.g., a CIS sink electronic device, the first external electronic device 202, or the second external electronic device 204). In operation 710, the electronic device 101 may transmit a link layer CIS request message (e.g., an LL_CIS_REQ packet) including control data (e.g., control data 800 of FIG. 8) for establishing a CIS link (e.g., the first CIS link 506) to the external electronic device 700. In operation 712, the electronic device 101 may receive a link layer CIS response message (e.g., an LL_CIS_RSP packet) from the external electronic device 700. In operation 714, the electronic device 101 may transmit a link layer CIS indication message (e.g., an LL_CIS_IND packet) to the external electronic device 700.

In operations 716, 718, and 720, the electronic device 101 and the external electronic device 700 may confirm the establishment of the CIS link by exchanging one or more CIS null packets (e.g., protocol data units (PDUs)). In operation 722, the electronic device 101 and the external electronic device 700 may communicate CIS data PDUs through the CIS link.

In BLE, a CIS may mean a logical transmission that may transmit isochronous data in any direction between electronic devices that have established a communication link. The CIS may enable transmission of data of a variable size as well as a fixed size and be used for both framed data and unframed data. For each CIS, time slots known as events and sub-events may be scheduled. The CIS may enable control of a data rate by transmitting a variable-size packet and one or more packets in each isochronous event. Data traffic may be transmitted on a CIS link unidirectionally or bidirectionally between devices, and include an acknowledgment (ACK) protocol to improve the reliability of packet transmission.

FIG. 8 is a diagram illustrating an example of control data configured for CIS communication according to an embodiment.

Referring to FIG. 8, parameters (e.g., referred to as CIS parameters) used in CIS communication may be provided to the external electronic device 700 (e.g., the first external electronic device 202 or the second external electronic device 204) through control data 800 included in LL_CIS_REQ of operation 710. In an embodiment, the electronic device 101 operating as a master (or a central device) may allocate a CIS_ID for CIS communication, and the CIS_ID may be shared with the external electronic device 700 serving as a slave (or a peripheral device) through a link layer message (e.g., LL_CIS_REQ).

In an embodiment, the control data 800 may include at least one of CIG_ID 802 identifying a CIG (e.g., the CIG 510), CIS_ID 804 identifying a CIS link (e.g., the first CIS link 506), a parameter (including PHY_M_To_S and PHY_S_To_M) indicating a master-slave physical layer transmission method (hereinafter, referred to as PHY), a Max_SDU parameter (including Max_SDU_M_To_S and Max_SDU_S_To_M) indicating a maximum size of a service data unit (SDU), at least one reserved for future use (RFU) field, a Framed field, an SDU_Interval parameter (including SDU_Interval_M_to_S and SDU_Interval_S_to_M), a Max_PDU parameter (including Max_PDU_M_To_S and Max_PDU_S_To_M) indicating a maximum PDU size, number of sub-events (NSE) 806, a Sub_Interval parameter 808 (including Sub_Interval_M_To_S and Sub_Interval_S_To_M), a burst number (BN) parameter (including BN_M_To_S and BN_S_To_M), a flushing time (FT) parameter (including FT_M_To_S and FT_S_To_M), ISO_Interval 810, a CIS offset parameter (including CIS_Offset_Min and CIS_Offset_Max), or connEventCount.

The parameters configured by the control data 800 may be applied to an audio data transmission on the CIS link (e.g., the first CIS link 506), and may not be changed from the establishment of the CIS link until termination of the CIS link. The CIS_ID 804 may be shared with a host of the external electronic device 700 through the link layers of the electronic device 101 and the external electronic device 700, and may not be used in the link layers.

PHY_M_To_S and PHY_S_To_M may indicate a PHY used for data transmission in a master-slave direction and a PHY used for data transmission in a slave-master direction, respectively. The PHYs (e.g., at least one of LE 1 mega-symbol per second (1M), LE 2 mega-symbol per second (2M), a Coded PHY with S=2, or a Coded PHY with S=8) indicated by PHY_M_To_S and PHY_S_To_M may be used on the CIS link.

The ISO_Interval 810 may indicate a regular time interval between two consecutive CIS anchor points, and one CIS event starting from each anchor point may occur within one isochronous (ISO) interval. One CIS event may include one or more sub-events indicating master-slave transmission occasions. The Sub_Interval 808 may indicate a time interval between two consecutive sub-events within a CIS event, and a maximum length of each sub-event may be specified by SE_Length. The Max_PDU may indicate a maximum size of a CIS data PDU. The Max_SDU may indicate a maximum size of an SDU on the CIS. The NSE may indicate a maximum number of sub-events within each CIS event. A BN specified by the BN parameter may indicate the number of packets that may be transmitted without an ACK/NACK. The NSE parameter may have the larger value of BN_M_To_S and BN_S_To_M, and may be set to a maximum of 31. The FT parameter may indicate a maximum number of CIS events in which a CIS data PDU may be transmitted (or retransmitted), and have a value from 1 to 255.

Encryption of the ACL link (e.g., the first ACL link 502) may be applied for encryption of the CIS link (e.g., the first CIS link 506) as it is. Both the central device (e.g., the electronic device 101) and the peripheral device (e.g., the external electronic device 700) may have a 39-bit CIS event counter, cisEventCounter, and the CIS event counter may be set to 0 for the first CIS event of the CIS link (e.g., the first CIS link 506), and then increased by 1 each time an isochronous PDU is transmitted in each CIS event. The CIS link (e.g., the first CIS link 506) may have a 39-bit CIS payload number, cisPayloadNumber, and may be terminated when the CIS payload number becomes 2³⁹-1. A CIS null PDU may not have cisPayloadNumber.

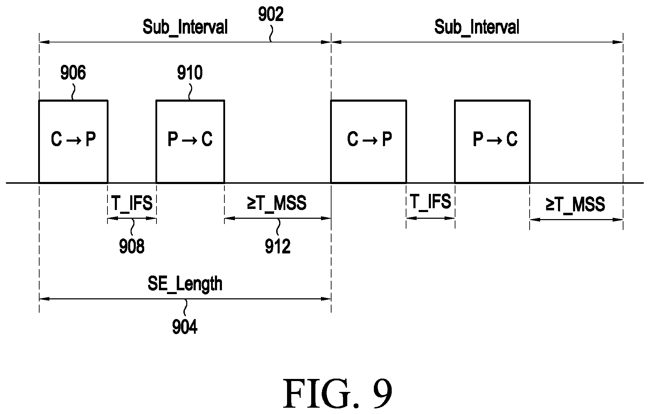

FIG. 9 is a timing diagram illustrating an example of CIS communication according to an embodiment.

Referring to FIG. 9, CIS communication may include CIS events occurring at a configured interval (e.g., an ISO interval that may be indicated by the ISO_Interval 810), and each CIS event may include one or more sub-events (e.g., a first sub-event 902 corresponding to Sub_Interval). SE_Length 904 indicating the length of each sub-event may be specified by, for example, the Sub_Interval parameter 808 in the CIS control data 800.

In an embodiment, during one sub-event (e.g., the first sub-event 902), the electronic device 101 may perform one transmission (e.g., a C->P packet 906 or a CtoP packet transmitted from the electronic device 101 (e.g., a central device) to the external electronic device 700 (e.g., a peripheral device) and one reception (e.g., a P->C packet 910 or a PtoC packet transmitted from the external electronic device 700 (the peripheral device) to the electronic device 101 (the central device)). The external electronic device 700 may receive the C->P packet 906 and transmit a corresponding response (e.g., the P->C packet 910) after an interval 908 of T_IFS. In an embodiment, when the external electronic device 700 fails to receive the packet 906 from the electronic device 101, it may not perform any transmission during the first sub-event 902. The electronic device 101 and the external electronic device 700 may use the next sub-event for a retransmission (RT) of the packet 906 or transmission of the next packet.

There may be at least an interval of T_MSS (time for minimum sub-event space) 912 until before the end of the first sub-event 902 after the transmission (e.g., the P->C packet 910) of the external electronic device 700. The T_MSS 912 may refer to a minimum time interval between the last bit of the last packet (e.g., the P->C packet 910) and the first bit of the first packet of the next sub-event within one sub-event (e.g., the first sub-event 902), and may be specified as 150 microseconds (µs) by the standard, for example.

When the electronic device 101 and the external electronic device 700 complete the transmission of isochronous data scheduled in the CIS event, all remaining sub-events of the CIS event will not have any more transmissions, and the CIS event may be terminated.

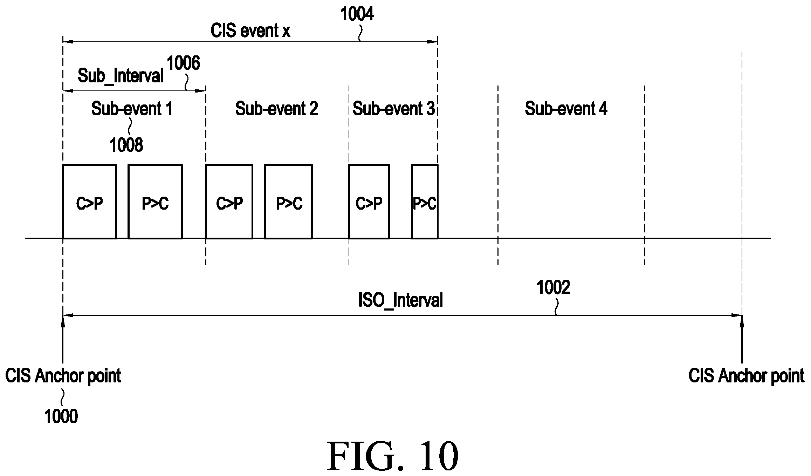

FIG. 10 is a diagram illustrating an example of a CIS event according to an embodiment.

Referring to FIG. 10, at least one CIS event (e.g., CIS event x 1004) may be included within an ISO_Interval 1002 for a CIS link. The CIS event x 1004 may mean an opportunity in which a central device (e.g., the electronic device 101) and a peripheral device (e.g., the external electronic device 700) may exchange CIS packets (e.g., CIS PDUs), occurs at regular intervals, and include up to NSE sub-events (e.g., including sub-event 1 1008). For example, when NSE=4, there may be up to four sub-events within the CIS event x1004, and the case where three sub-events (e.g., sub-event 1 1008, sub-event 2, and sub-event 3) occur is illustrated herein. Each CIS event (e.g., the CIS event x 1004) starts at every CIS anchor point 1000 until the CIS communication is terminated, and there may be a regular interval of the ISO_Interval 1002 between two consecutive CIS anchor points.

Each CIS event (e.g., the CIS event x 1004) may be divided into one or more sub-events (e.g., including the sub-event 1 1008). Within the one sub-event 1 1008, there may be a data transmission "C->P" from the central device (e.g., the electronic device 101) to the peripheral device (e.g., the external electronic device 700) and a data transmission "P->C" from the peripheral device to the central device. There may be a gap of the Sub_Interval 1006 between the start times of two consecutive sub-events within the CIS event x 1004.

A CIG, which is a group of CISs that provide the same service, may include one or more CISs. Multiple CISs within a CIG may have a common timing reference based on a timing of the central device (e.g., the electronic device 101) and may be synchronized in time units. The CIG may have a time relationship at an application level. CISs within a CIG may have the same ISO_Interval (e.g., the ISO_Interval 1002), and up to 31 CISs may be included in the CIG. The central device may assign a CIG_ID and share the CIG_ID with the peripheral device (e.g., the external electronic device 700) through an LL message.

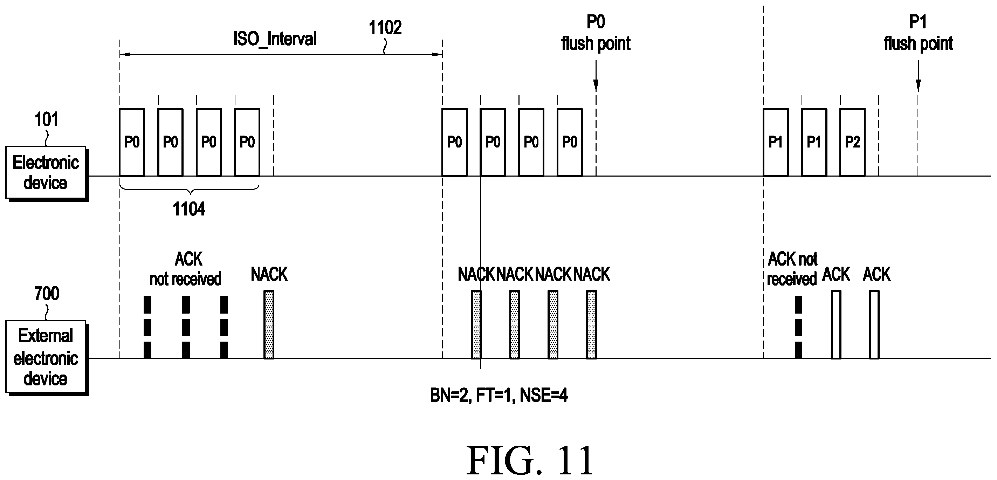

FIG. 11 is a diagram illustrating an example of CIS transmission according to an embodiment.

Referring to FIG. 11, BN=2, FT=1, and NSE=4 are set for a CIS transmission. During a first CIS event 1102 having an ISO interval, the electronic device 101 may repeatedly transmit packet P0 using up to four sub-events 1104 according to NSE=4. For example, the external electronic device 700 may fail to receive packet P0 1104 in the four sub-events 1104 and transmit a NACK using the last fourth sub-event.

When the electronic device 101 fails to successfully transmit packet P0 until a flush point of packet P0 is reached in a second CIS event, that is, when the electronic device 101 does not receive an ACK for packet P0, the electronic device 101 may transmit a next packet P1 in a third CIS event. Upon receipt of an ACK from the external electronic device 700 using a second sub-event of the third CIS event, the electronic device 101 may transmit a next packet P2 using a third sub-event of the third CIS event.

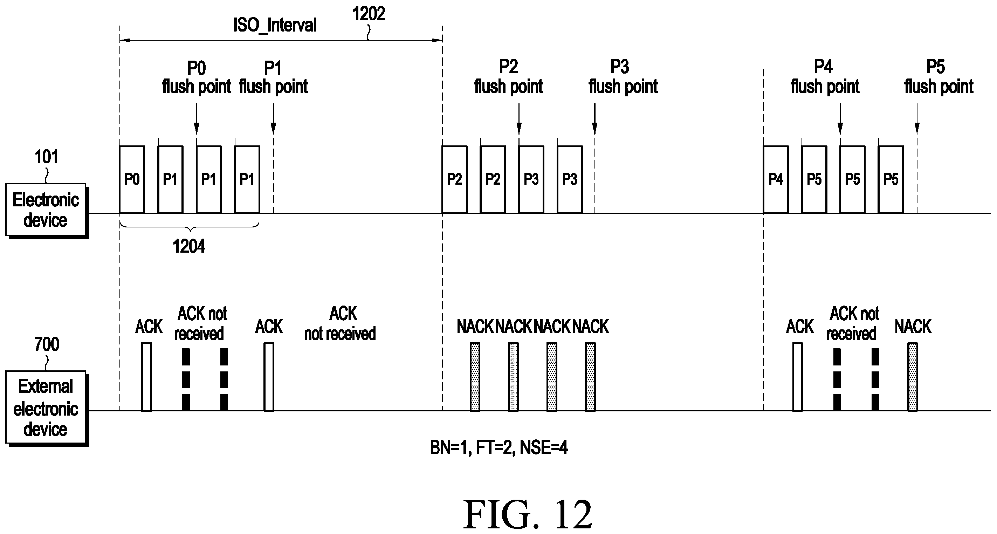

FIG. 12 is a diagram illustrating another example of CIS transmission according to an embodiment.

Referring to FIG. 12, BN=1, FT=2, and NSE=4 are set for a CIS transmission. During a first CIS event 1202 having an ISO interval, the electronic device 101 may use up to four sub-events 1204 according to NSE=4. For example, in a first sub-event, the electronic device 101 may transmit packet P0 and receive an ACK from the external electronic device 700. In second, third, and fourth sub-events, the electronic device 101 may repeatedly transmit packet P1, and in the fourth sub-event, the external electronic device 700 may transmit an ACK for packet P1 to the electronic device 101.

For a second CIS event, the electronic device 101 may repeatedly transmit packet P2 using first and second sub-events, and repeatedly transmit packet P3 using third and fourth sub-events. For a third CIS event, the electronic device 101 may repeatedly transmit packet P4 using a first sub-event, and repeatedly transmit packet P5 using second, third, and fourth sub-events.

The electronic device 101 may configure CIS parameters for the first external electronic device 202 and the second external electronic device 204 by transmitting control data (e.g., the control data 800) including the CIS parameters to the external electronic device 700 (e.g., the first external electronic device 202 and/or the second external electronic device 204) to transmit audio data using CIS communication. For example, for a media type, two CISs (e.g., the first CIS link 506 and the second CIS link 508) having the CIS parameters of ISO interval = 20ms, BN = 2, FT = 5, NSE = 6, and SE length = 884µs are opened between the electronic device 101 and the first external electronic device 202 and the second external electronic device 204, and an audio service may be performed through the CISs.

In an embodiment, per-CIS resources available to the electronic device 101 for one CIS may be calculated as "SE length × NSE / ISO interval", and thus, resources for a plurality of CISs may be "available per-CIS resources × CIS count". The CIS count may mean the number of CISs (e.g., 2) included in one CIG. In an embodiment, the electronic device 101 may determine the resources by using a specified SE length, and the ISO interval 810 and the NSE 806 among the CIS parameters included in the control data 800 transmitted to the first external electronic device 202 and the second external electronic device 204.

The CIG may be expected to have a time relationship in the application layer and include Num_CIS CISs with the same ISO interval, where Num_CIS may be less than or equal to 31. A host of the central device (e.g., the electronic device 101) may assign a CIG_ID to a CIG. CISs within each CIG may be arranged in a sequential or interleaved manner according to a Sub_Interval and the interval between CIS anchor points.

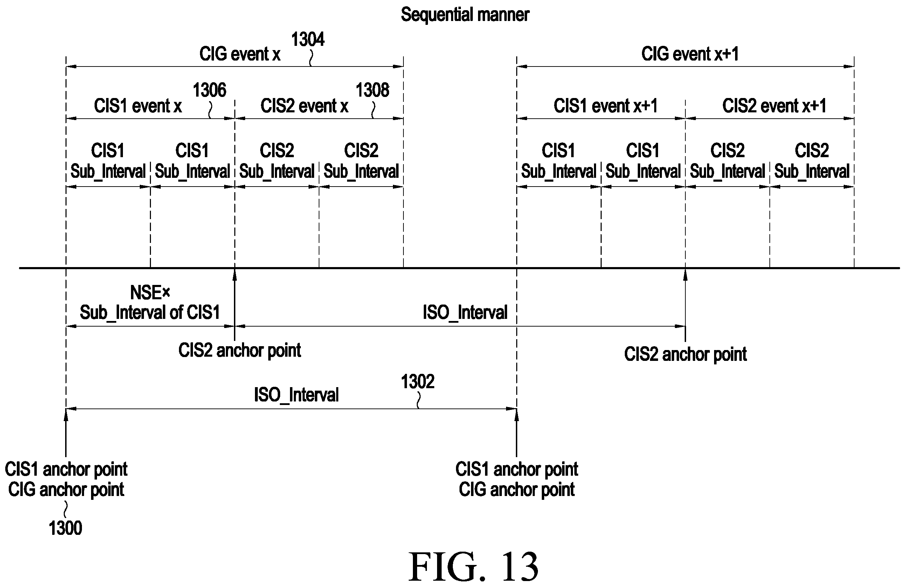

FIG. 13 is a diagram illustrating CISs arranged in a sequential manner according to an embodiment.

Referring to FIG. 13, an ISO_Interval 1302 may start at a CIS1 anchor point 1300 overlapping a CIG anchor point and include CIG events (e.g., CIG event x 1304). Within the CIG event x 1304, CIS2 event x 1308 may occur immediately after CIS1 event x 1306.

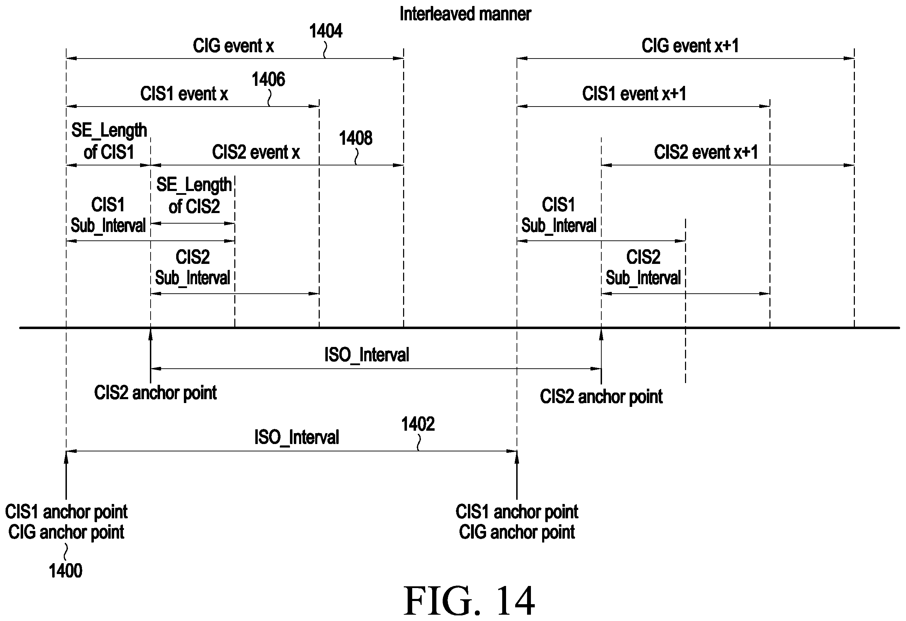

FIG. 14 is a diagram illustrating CISs arranged in an interleaved manner according to an embodiment.

Referring to FIG. 14, an ISO_Interval 1402 may start at a CIS1 anchor point 1400 overlapping a CIG anchor point and include CIG events (e.g., CIG event x 1404). Within the CIG event x 1404, CIS2 event x 1408 may occur overlapping CIS1 event x 1406.

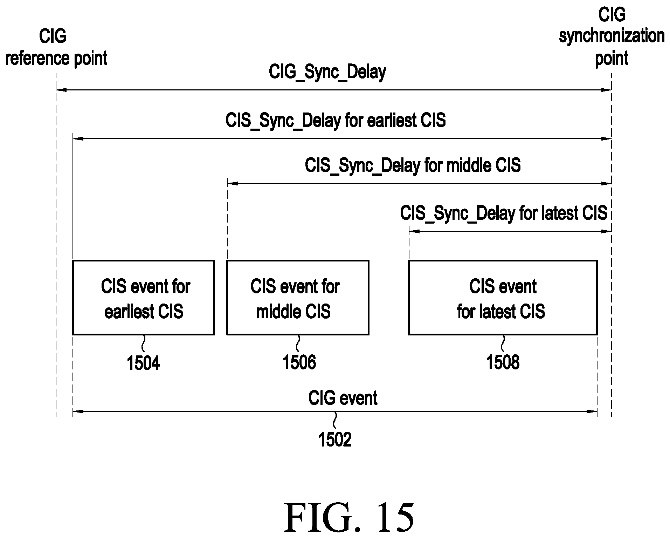

FIG. 15 is a diagram illustrating a CIG event layout including three CISs according to an embodiment.

Referring to FIG. 15, a CIG event 1502 (e.g., the CIG event x 1304 or the CIG event x 1404) may include a plurality of CIS events (e.g., a CIS event 1504, a CIS event 1506, and a CIS event 1508) corresponding to a plurality of CISs. The CIG event 1502 may start at an anchor point (e.g., the CIS1 anchor point 1300 or the CIS1 anchor point 1400) of the CIS event 1504 for an earliest CIS and end at an end time of the CIS event 1508 for a latest CIS. The CIG event 1502 may include a CIG reference point and a CIG synchronization point, and the two points may have a gap of CIG_Sync_Delay. The start time of each of the CIS events 1504, 1506, and 1508 may have a gap of CIS_Sync_Delay from the CIG synchronization point.

The link layer of the central device (e.g., the electronic device 101) may provide timing parameters (e.g., CIG_Sync_Delay and CIS_Sync_Delay) to the link layer of the peripheral device (e.g., the external electronic device 700) to enable synchronization of isochronous data in the application layer.

Each CIS event may include up to NSE sub-events, and the central device (e.g., the electronic device 101) may transmit audio data to the peripheral device (e.g., the external electronic device 700) using a plurality of sub-events within the CIS event. In an embodiment, the central device may be a source electronic device and the peripheral device may be a sink electronic device in an audio service.

An electronic device (e.g., the electronic device 101) supporting Bluetooth communication (e.g., BLE) may include a generic audio framework, and the generic audio framework may perform an audio service using profiles such as a basic audio profile (BAP) and services such as a published audio capability service (PACS) and an audio stream control service (ASCS). The BAP may include an interoperability profile for setting up unicast and broadcast audio streams. The BAP may define an audio stream control procedure for devices (e.g., the electronic device 101 and the external electronic devices 202 and 204) that want to use BLE by using a generic attribute profile (GATT) and a generic access profile (GAP) in an audio-related scenario (e.g., unicast audio or broadcast audio).

The ASCS may be instantiated in devices (e.g., the external electronic devices 202 and 204) capable of accommodating the establishment of unicast audio streams or receiving broadcast audio streams. An electronic device (e.g., the electronic device 101 and the external electronic devices 202 and 204) using an audio service by the ASCS may include an audio stream endpoint (ASE) through which audio data is transmitted and received. Each electronic device (e.g., the electronic device 101 and the external electronic devices 202 and 204) may include one or more ASEs uniquely identified by ASE_IDs, and each ASE may be defined by ASE characteristics. In an embodiment, the electronic device 101 may include a source ASE. In an embodiment, each external electronic device 202 or 204 may include a sink ASE.

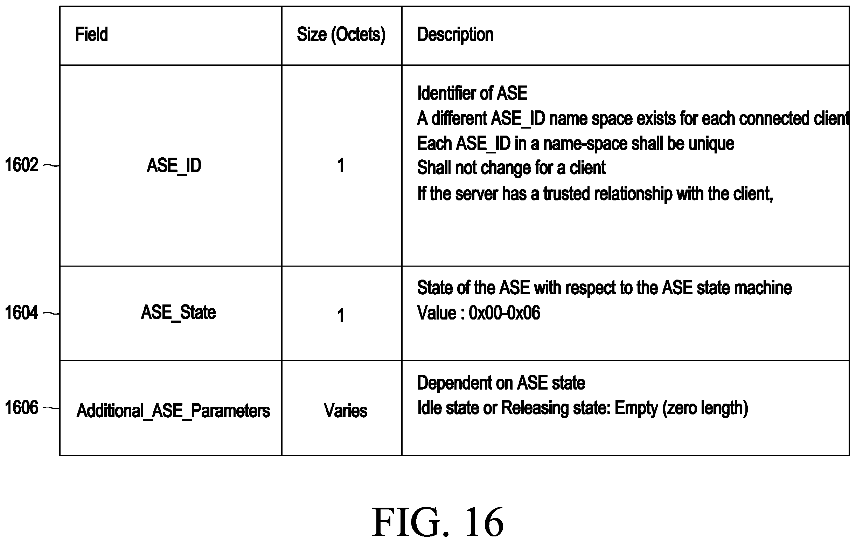

FIG. 16 illustrates an ASE characteristic format according to an embodiment.

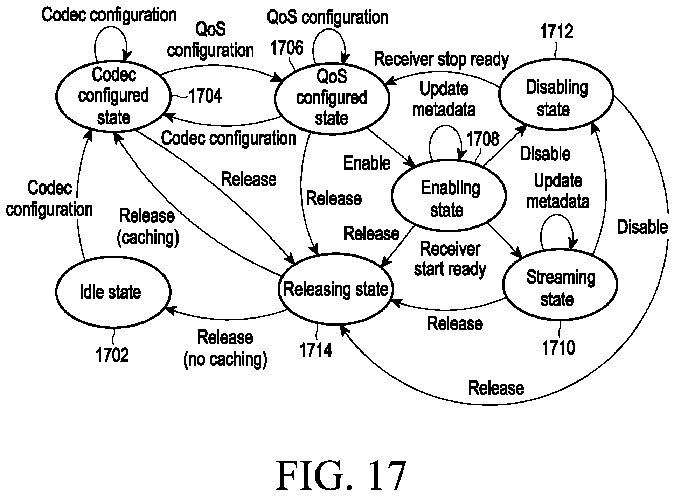

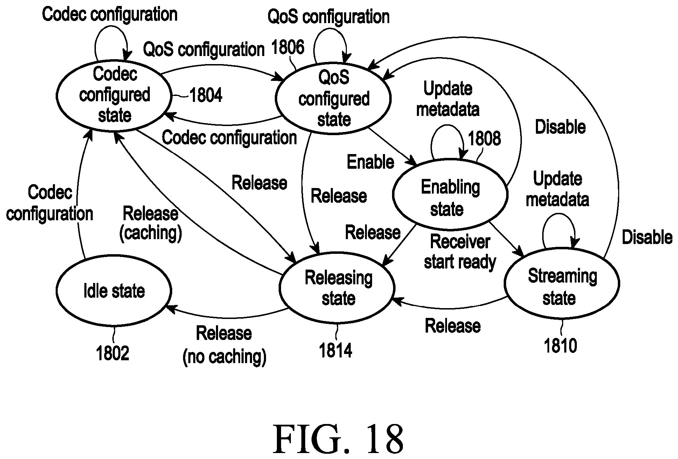

Referring to FIG. 16, ASE characteristics may include ASE_ID 1602, ASE_State 1604, and additional_ASE_Parameters 1606. The ASE_ID 1602 may uniquely identify an ASE and be assigned by the electronic device 101. The electronic device 101 may assign a different ASE_ID to each external electronic device 202 or 204. The ASE characteristics may include the ASE_State 1604 indicating an ASE state (e.g., the states of FIG. 17 or FIG. 18) that may be coupled to a CIS to establish an audio stream. For each ASE state, the electronic device 101 may provide ASE characteristics to each of the external electronic devices 202 and 204. The additional_ASE_Parameters 1606 may include one or more parameters (e.g., parameter fields of <Table 1> or <Table 2>) determined according to an ASE state indicated by the ASE_State 1604.

FIG. 17 is a diagram illustrating source ASE states according to an embodiment.

Referring to FIG. 17, the electronic device 101 including a source ASE may operate in any one of an idle state 1702, a codec configured state 1704, a QoS configured state 1706, an enabling state 1708, a streaming state 1710, a disabling state 1712, or a releasing state 1714.

FIG. 18 is a diagram illustrating sink ASE states according to an embodiment.

Referring to FIG. 18, the external electronic device 700 (e.g., the first external electronic device 202 or the second external electronic device 204) including a sink ASE may operate in any one of an idle state 1802, a codec configured state 1804, a QoS configured state 1806, an enabling state 1808, a streaming state 1810, or a releasing state 1814.

The idle state 1702 or 1802 may mean a state in which a codec configuration or a QoS configuration is not applied.

The codec configured state 1704 or 1804 may mean a state in which the codec configuration is applied. The codec configuration may be applied autonomously by the electronic device 101 or requested by the external electronic device 700 (e.g., the first external electronic device 202 or the second external electronic device 204).

The QoS configured state 1706 or 1806 may mean a state in which the QoS configuration is applied. The QoS configuration applied to the ASE may be different from an actual configuration applied to a corresponding CIS link.

The enabling state 1708 or 1808 may mean a state in which the codec configurations and the QoS configuration are applied and metadata applied in the electronic device 101 and the external electronic device 700 (e.g., the first external electronic device 202 or the second external electronic device 204) is associated with the ASE.

The streaming state 1710 or 1810 may mean a state in which the codec configuration and the QoS configuration are applied and the ASE is coupled to the CIS. The electronic device 101 and the external electronic device 700 (e.g., the first external electronic device 202 or the second external electronic device 204) are ready to transmit or receive audio data in the streaming state 1810.

The disabling state 1712 may mean a state in which the codec configuration and the QoS configuration are applied in the electronic device 101 and the ASE is decoupled from the CIS.

The releasing state 1712 or 1812 may mean a state in which the CIS is disconnected from the ASE. In the releasing state 1712, the electronic device 101 may cache or delete the codec configuration.

The codec configured state 1704 or 1804 may be initiated or maintained by a codec configuration (e.g., Config Codec) operation. The codec configuration operation may be used to request a codec configuration from the electronic device 101. When the electronic device 101 successfully completes the codec configuration operation, the electronic device 101 may expose QoS parameters preferred by the electronic device 101 to the external electronic device 700 (e.g., the first external electronic device 202 or the second external electronic device 204). The codec configuration operation may be initiated autonomously by the electronic device 101. When the value of the ASE_State field 1604 is 0x00 (Idle), 0x01 (Codec Configured) or 0x02 (Qos Configured), the codec configuration operation may be valid. The codec configuration operation may determine at least one of the parameter fields in <Table 1> below.

**[Table 1]**

| Opcode | Size (Octets) | Description |
|---|---|---|
| 0x01 | 1 | 0x01 = Config Codec |
| Parameter | Size (Octets) | Description |
| Number_of_ASEs | 1 | Total number of ASEs used in the Config Codec operation Shall be ≥ 1 |
| ASE_ID | 1 | ASE_ID for this ASE |
| Target_Latency | 1 | Provides context for the server to return meaningful values for QoS preferences in Codec Configured state 0x01 = Target low latency |
| | | 0x02 = Target balanced latency and reliability |
| | | 0x03 = Target high reliability |
| Target_PHY | 1 | PHY parameter target to achieve the Target _Latency value 0x01: LE 1M PHY |
| | | 0x02: LE 2M PHY |
| | | 0x03: LE Coded PHY |
| Codec_ID | 5 | Octet 0: Coding_Format Coding_Format values are defined in Bluetooth Assigned Numbers. |
| | | Octet 1-2: Company_ID value Company_ID values are defined in Bluetooth Assigned Numbers. |
| | | Shall be 0x0000 if octet 0 is ≠ 0xFF |
| | | Octet 3-4: Vendor-specific codec_ID value Shall be 0x0000 if octet 0 is ≠ 0xFF |
| Codec_Specific_Configuration_Length | 1 | Length of the Codec_Specific_ Configuration value for this ASE |
| Codec_Specific_Config uration | Varies | Codec-Specific Configuration for this ASE Shall exist only if the Codec_Specific_Configuration_Length parameter value is ≠ 0x00 |

The QoS configured state 1706 or 1806 may be initiated or maintained by a QoS configuration (or Config QoS) operation. The QoS configuration operation may be used to request a default CIS configuration (configuration preference) from the electronic device 101 and to assign an ID to a CIS. When the value of the ASE_State field 1604 is 0x01 (Codec Configured) or 0x02 (QoS Configured), the QoS configuration operation may be valid. The QoS configuration operation may determine at least one of the parameter fields of <Table 2> below.

**[Table 2]**

| Opcode | Size (Octets) | Description |
|---|---|---|
| 0x02 | 1 | 0x02 = Config QoS |
| Parameter | Size (Octets) | Description |
| Number_of_ASEs | 1 | Total number of ASEs used in the Config QoS operation Shall be ≥ 1 |
| ASE_ID | 1 | ASE_ID for this ASE |
| CIG_ID | 1 | CIG_ID parameter value written by the client for this ASE |
| CIS_ID | 1 | CIS_ID parameter value written by the client for this ASE |
| SDU_Interval | 3 | SDU_Interval parameter value written by the client for this ASERange: 0x0000FF-0x0FFFFF |
| Framing | 1 | Framing parameter value written by the client for this ASE 0x00: Unframed |
| | | 0x01: Framed |
| PHY | 1 | PHY parameter value written by the client for this ASE 0b00000001 : LE 1M PHY |
| | | 0b00000010: LE 2M PHY |
| | | 0b00000100: LE Coded PHY |
| Max_SDU | 2 | Max_SDU parameter value written by the client for this ASE Range: 0x00-0x0FFF |
| Retransmission_Number (RTN) | 1 | Retransmission_Number parameter written by the client for this ASE Range: 0x00-0xFF |
| Max_Transport_Latency (MTL) | 2 | Max_Transport_Latency parameter value written by the client for this ASE Range: 0x0005-0x0FA0 |
| Presentation_Delay | 3 | Presentation delay parameter value being requested by the client for this ASE Units: µs |

In an embodiment, an audio service through Bluetooth audio may support various service types, including a media type for listening to music and a conversational type for making a call. The audio service of the media type may have the characteristic of supporting longer latency for the reliability of a media stream that a user listens to, and allowing more PDUs to be stored. The audio service of the conversational type used for real-time calls may have the characteristics of immediately rendering a PDU upon receiving it by supporting low latency instead of the reliability of a voice stream. Depending on the usage pattern or usage environment of the audio service, service type switching may occur while the electronic device 101 and the external electronic device 700 (e.g., the first external electronic device 202 or the second external electronic device 204) are using the audio service.

The service type switching may cause the problem of stream disconnection. For example, while the electronic device 101 is providing an audio service to the external electronic device 700 (e.g., the first external electronic device 202 or the second external electronic device 204) as a media type using a music application, service type switching to the conversation type may occur due to the occurrence of an incoming call. In order to switch the service type, the electronic device 101 may terminate the CIS link of an ASE that is currently in the streaming state (e.g., the streaming state 1710) and transition the ASE of a CIS link for providing an audio service of the new service type to the streaming state 1710. This may cause the user to experience the inconvenience of stream disconnection while the CIS link of the previous service type is disconnected and the CIS link of the new service type is created.

The electronic device 101 and the external electronic device 700 (e.g., the first external electronic device 202 or the first external electronic device 204) may terminate the previous CIS link and create a new CIS link whenever service type switching occurs. In order to create the new CIS link, the electronic device 101 and the external electronic device 700 (e.g., the first external electronic device 202 or the second external electronic device 204) continuously perform an ASE state transition through the codec configuration operation and the QoS configuration operation, which may temporarily interrupt the audio service.

It may take, for example, several hundred milliseconds to several seconds to establish the new CIS link after terminating the CIS link of the previous service type, and during this time, audio data may not be transmitted from the electronic device 101 to the external electronic device 700 (e.g., the first external electronic device 202 or the second external electronic device 204).

Embodiments of the disclosure may perform a codec configuration and a QoS configuration for a new service type while maintaining a previously established CIS link, when service type switching occurs while the electronic device 101 and the external electronic device 700 (e.g., the first external electronic device 202 and the second external electronic device 204) are using an audio service through BLE audio.

Embodiments of the disclosure may create a new CIS link to support a new service type while maintaining a previous CIS link, and provide an audio service with the new CIS link at a specified start time.

Embodiments of the disclosure may perform an ASE control operation to support a new service type while maintaining a previous CIS link, and provide an audio service using parameters determined through the ASE control operation at a specified start time. The parameters may include one or more parameters (e.g., the parameter fields of <Table 1> or <Table 2>) determined according to an ASE state.

Embodiments of the disclosure may prevent stream interruption caused by CIS regeneration and provide a stable audio service to a user.

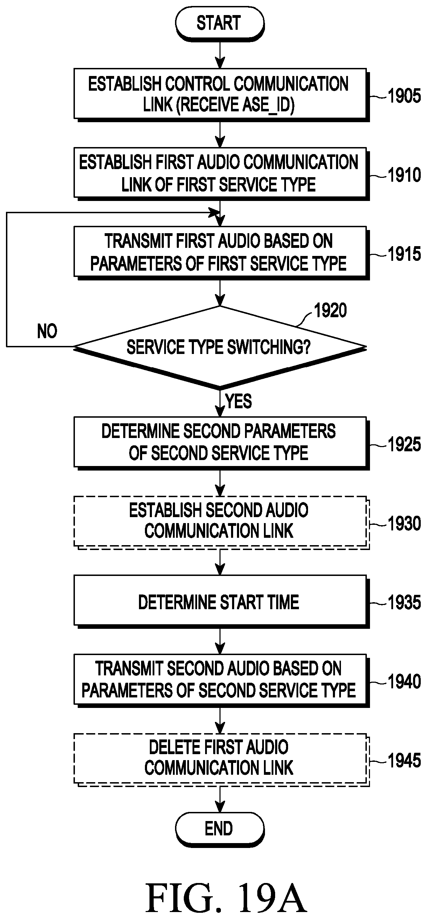

FIG. 19A is a flowchart illustrating a procedure of providing an audio service by an electronic device according to an embodiment. According to embodiments, at least one of the operations described below may be omitted, modified, or changed in order. At least one of the operations described below may be executed by the processor 120 of the electronic device 101. While operations for providing an audio service to the external electronic device 700 (e.g., the first external electronic device 202 or the second external electronic device 204) by the electronic device 101 will be described below, it is apparent that the following description is also applicable to an external electronic device other than the electronic device 101.

Referring to FIG. 19A, in operation 1905, the electronic device 101 (e.g., the processor 120) may establish (e.g., create) a control communication link with the external electronic device 700. In an embodiment, the control communication link may be created based on Bluetooth communication (e.g., BLE). In an embodiment, the control communication link may include an ACL link based on BLE. In an embodiment, operation 1905 may include at least one of the operations of FIG. 4.

In an embodiment, operation 1905 may include an operation of obtaining ASE information including the types of ASEs supported by the external electronic device 700 and the ASE_ID of each ASE by the electronic device 101 (e.g., the processor 120). In an embodiment, the external electronic device 700 may expose (e.g., transmit) ASE information (e.g., at least one of an ASE_ID, a Role, an ASE status, or a parameter) about each ASE supported by the external electronic device 700, and the electronic device 101 (e.g., the processor 120) may receive at least one piece of ASE information from the external electronic device 700. In an embodiment, the electronic device 101 (e.g., the processor 120) may transmit a signal requesting at least one piece of ASE information supported by the external electronic device 700 to the external electronic device 700, and receive the at least one piece of ASE information from the external electronic device 700 in response to the signal.

In operation 1910, the electronic device 101 (e.g., the processor 120) may establish (e.g., create) a first audio communication link to provide an audio service of a first service type to the external electronic device 700, using the control communication link. In an embodiment, the first audio communication link may include a first CIS link. In an embodiment, operation 1910 may include at least one of the operations of FIG. 7.

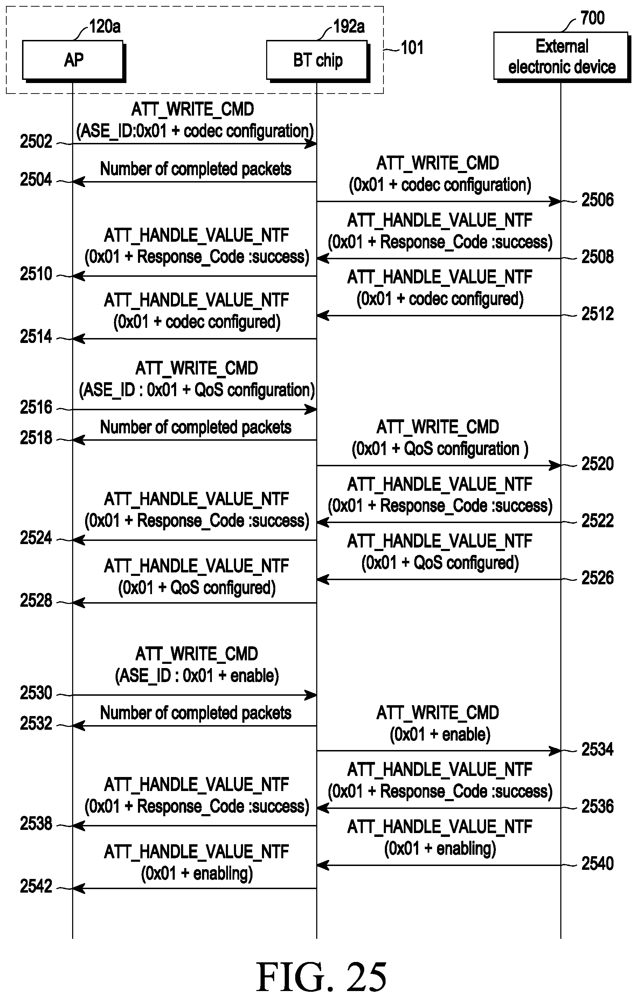

In an embodiment, operation 1910 may include ASE control (e.g., the procedure of FIG. 25) to support the first service type according to a user's intention or a specified policy. In an embodiment, the electronic device 101 (e.g., the processor 120) may request the external electronic device 700 to perform the ASE control prior to establishing the first audio communication link. The ASE control may include an operation of determining (e.g., negotiating) a first parameter set (e.g., at least one of the parameters in <Table 1> and/or <Table 2>) using a first ASE_ID that may support the first service type in the at least one piece of ASE information identified in operation 1905. In an embodiment, the first parameter set determined by the ASE control may be coupled to the first audio communication link.

In operation 1915, the electronic device 101 (e.g., the processor 120) may transmit first audio data (e.g., one or more audio PDUs) to the external electronic device 700 through the first audio communication link, based on the first parameter set determined through the ASE control according to the first service type.

In operation 1920, the electronic device 101 (e.g., the processor 120) may determine service type switching to a second service type according to the user's intention or a specified policy. In an embodiment, the electronic device 101 (e.g., the processor 120) may detect occurrence of an incoming call while executing a music application and playing music according to the first service type (e.g., media type), and determine switching to the second service type (e.g., conversational type). In an embodiment, the electronic device 101 (e.g., the processor 120) may terminate a game application while outputting music and game audio as the first service type (e.g., game type) and determine switching to the second service type (e.g., music type).

In operation 1925, the electronic device 101 (e.g., the processor 120) may determine (e.g., negotiate) a second parameter set (e.g., at least one of the parameters in <Table 1> and/or <Table 2>) to support the second service type by performing ASE control (e.g., the procedure of FIG. 25). In an embodiment, the second parameter set may be identified by the first ASE_ID that is the same as that of the first parameter set. In an embodiment, the second parameter set may be identified by a second ASE_ID different from that of the first parameter set. In an embodiment, the electronic device 101 (e.g., the processor 120) may perform the ASE control using the same ASE_ID (e.g., the first ASE_ID) after the service type switching, or may perform the ASE control using a new ASE_ID (e.g., the second ASE_ID) according to a method pre-agreed upon with the external electronic device 700. For example, the first service type may be the conversational type and include ASE_ID=0x01 and 0x03. The electronic device 101 (e.g., the processor 120) may perform the ASE control using ASE_ID=0x01 and 0x03, or may perform the ASE control using ASE_ID=0x04 and 0x05.

In an embodiment, the electronic device 101 (e.g., the processor 120) may share with the external electronic device 700 at least one label value indicating parameters preconfigured for each ASE state according to a pre-specified method, and select and transmit a specified label value to the electronic device 700 and then immediately transition to the enabling state 1708 or the streaming state 1710, instead of going through the codec configured state 1704 and the QoS configured state 1706 while performing ASE control.

In operation 1930, when needed, the electronic device 101 (e.g., the processor 120) may establish (e.g., create) a second audio communication link (e.g., a second CIS link) for the second service type. In an embodiment, the electronic device 101 (e.g., the processor 120) may create the second audio communication link and couple the second parameter set to the second audio communication link. In an embodiment, operation 1930 may be skipped, and the electronic device 101 (e.g., the processor 120) may couple the second parameter set to the first audio communication link to reuse the first audio communication link for the second service type. In an embodiment, the electronic device 101 (e.g., the processor 120) may determine whether to reuse the first audio communication link for the second service type or establish the second audio communication link, through negotiation with the external electronic device 700. In an embodiment, the electronic device 101 (e.g., the processor 120) may reuse the first audio communication link for the second service type or establish the second audio communication link, according to a pre-agreed scheme.

In operation 1935, the electronic device 101 (e.g., the processor 120) may determine (e.g., negotiate) a start time for starting to apply the second service type using the second parameter set. In an embodiment, the start time may include a specified time (e.g., the start time of a specific ISO interval) on the first audio communication link or the second audio communication link. While performing at least one of operation 1920, operation 1930, or operation 1935, the electronic device 101 (e.g., the processor 120) may continue to transmit audio data through the first audio communication link according to the first parameter set. In an embodiment, while performing at least one of operation 1920, operation 1930, or operation 1935, the electronic device 101 (e.g., the processor 120) may maintain an ASE streaming state (e.g., the streaming state 1710) for the first service type.

In operation 1940, the electronic device 101 (e.g., the processor 120) may transmit second audio data (e.g., one or more audio PDUs) to the external electronic device 700 from the determined start time, based on the second parameter set according to the second service type. In an embodiment, the second audio data may be transmitted through the first audio communication link or the second audio communication link. In an embodiment, the transmission of the first audio data using the first parameter set may be discontinued after the determined start time.

In operation 1945, when the second audio communication link is used, the electronic device 101 (e.g., the processor 120) may terminate (e.g., disconnect or release) the first audio communication link after the specified start time. In an embodiment, when the second audio communication link is established, the first audio communication link and the second audio communication link may exist redundantly until before the specified start time. In an embodiment, the first audio communication link may be maintained for a specified period after the specified start time. In an embodiment, the first audio communication link may be maintained during the specified period so that it may be reused after the specified start time.

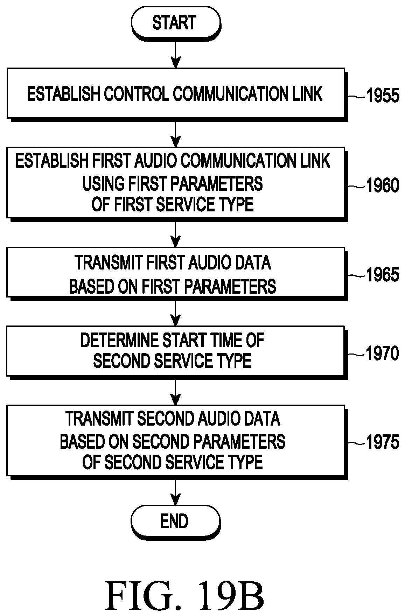

FIG. 19B is a flowchart illustrating a procedure of providing an audio service by an electronic device according to an embodiment. According to embodiments, at least one of the operations described below may be omitted, modified, or changed in order. At least one of the operations described below may be executed by the processor 120 of the electronic device 101. While operations for providing an audio service to an external electronic device 700 (e.g., the first external electronic device 202 or the second external electronic device 204) by the electronic device 101, it is apparent that the following description is also applicable to an external electronic device other than the electronic device 101.

Referring to FIG. 19B, in operation 1955, the electronic device 101 (e.g., the processor 120) may establish (e.g., create) a control communication link with the external electronic device 700. In an embodiment, the control communication link may be created based on Bluetooth communication (e.g., BLE). In an embodiment, the control communication link may include an ACL link based on BLE. In an embodiment, operation 1955 may include at least one of the operations of FIG. 4.

In an embodiment, operation 1955 may include an operation of obtaining ASE information including the types of ASEs supported by the external electronic device 700 and the ASE_ID of each ASE by the electronic device 101 (e.g., the processor 120). In an embodiment, the external electronic device 700 may expose (e.g., transmit) ASE information (e.g., at least one of an ASE_ID, a Role, an ASE state, or a parameter) about each ASE supported by the external electronic device 700, and the electronic device 101 (e.g., the processor 120) may receive at least one piece of ASE information from the external electronic device 700. In an embodiment, the electronic device 101 (e.g., the processor 120) may transmit a signal requesting at least one piece of ASE information supported by the external electronic device 700 to the external electronic device 700, and receive the at least one ASE piece of information from the external electronic device 700 in response to the signal.

In operation 1960, the electronic device 101 (e.g., the processor 120) may establish (e.g., create) a first audio communication link for providing an audio service of a first service type to the external electronic device 700, using the control communication link. In an embodiment, the first audio communication link may include a first CIS link. In an embodiment, operation 1960 may include at least one of the operations of FIG. 7.

In an embodiment, operation 1960 may include ASE control (e.g., the procedure of FIG. 25) to support the first service type according to the user's intention or a specified policy. In an embodiment, the electronic device 101 (e.g., the processor 120) may request the external electronic device 700 to perform the ASE control prior to establishing the first audio communication link. The ASE control may include an operation of determining (e.g., negotiating) a first parameter set (e.g., at least one of the parameters in <Table 1> and/or <Table 2>) using a first ASE_ID which may support the first service type in the at least one piece of ASE information identified in operation 1955. In an embodiment, the first parameter set determined by the ASE control may be coupled to the first audio communication link.

In operation 1965, the electronic device 101 (e.g., the processor 120) may transmit first audio data (e.g., one or more audio PDUs) to the external electronic device 700 through the first audio communication link, based on the first parameter set determined through the ASE control according to the first service type.

In operation 1970, the electronic device 101 (e.g., the processor 120) may determine (e.g., negotiate) a start time for applying service type switching to a second service type according to the user's intention or a specified policy. In an embodiment, the start time may include a specified time point (e.g., the start time of a specific ISO interval) on the first audio communication link or the second audio communication link. While performing operation 1970, the electronic device 101 (e.g., the processor 120) may continue to transmit audio data through the first audio communication link according to the first parameter set. In an embodiment, while performing operation 1970, the electronic device 101 (e.g., the processor 120) may maintain an ASE streaming state (e.g., the streaming state 1710) for the first service type.

In operation 1975, the electronic device 101 (e.g., the processor 120) may transmit second audio data (e.g., one or more audio PDUs) to the external electronic device 700 from the determined start time, based on a second parameter set according to the second service type. In an embodiment, the second audio data may be transmitted through the first audio communication link or the second audio communication link. In an embodiment, the transmission of the first audio data using the first parameter set may be discontinued after the determined start time.

In an embodiment, when the second audio communication link is used, the electronic device 101 (e.g., the processor 120) may terminate (e.g., disconnect or release) the first audio communication link after the specified start time. In an embodiment, when the second audio communication link is established, the first audio communication link and the second audio communication link may exist redundantly until before the specified start time. In an embodiment, the first audio communication link may be maintained during a specified period after the specified start time. In an embodiment, the first audio communication link may be maintained during the specified period so that it may be reused after the specified start time.

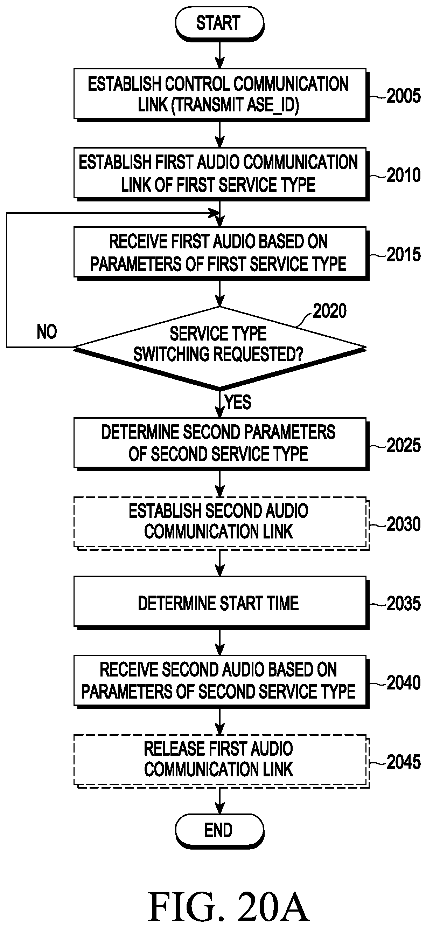

FIG. 20A is a flowchart illustrating a procedure of receiving an audio service by an external electronic device according to an embodiment. According to embodiments, at least one of the operations described below may be omitted, modified, or changed in order. At least one of the operations described below may be executed by a processor (e.g., the processor 310) of the external electronic device 700.

Referring to FIG. 20A, in operation 2005, the external electronic device 700 (e.g., the processor 310) may establish (e.g., create) a control communication link with the electronic device 101. In an embodiment, the control communication link may be created based on Bluetooth communication (e.g., BLE). In an embodiment, the control communication link may include an ACL link based on BLE. In an embodiment, operation 2005 may include at least one of the operations of FIG. 4.

In an embodiment, operation 2005 may include an operation of providing the types of ASEs supported by the external electronic device 700 and the ASE_ID of each ASE to the electronic device 101 by the external electronic device 700 (e.g., the processor 310). In an embodiment, the external electronic device 700 (e.g., the processor 310) may autonomously transmit the ASE_ID of each ASE supported by the external electronic device 700 to the electronic device 101. In an embodiment, the external electronic device 700 (e.g., the processor 310) may receive a signal requesting at least one ASE supported by the external electronic device 700 from the electronic device 101, and transmit at least one ASE_ID supported by the external electronic device 700 to the electronic device 101 in response to the signal.

In operation 2010, the external electronic device 700 (e.g., the processor 310) may establish (e.g., create) a first audio communication link for receiving an audio service of a first service type from the electronic device 101, using the control communication link. In an embodiment, the first audio communication link may include a first CIS link. In an embodiment, operation 2010 may include at least one of the operations of FIG. 7.

In an embodiment, operation 2010 may include ASE control (e.g., the procedure of FIG. 25) to support the first service type according to the user's intention or a specified policy. In an embodiment, the external electronic device 700 (e.g., the processor 310) may perform the ASE control in response to a request from the electronic device 101 prior to establishing the first audio communication link. The ASE control may include an operation of determining (e.g., negotiating) a first parameter set (e.g., at least one of the parameters of <Table 1> and/or <Table 2>) identified by a first ASE_ID that may support the first service type in the at least one ASE_ID provided in operation 2005. In an embodiment, the first parameter set determined by the ASE control may be coupled to the first audio communication link.

In operation 2015, the external electronic device 700 (e.g., the processor 310) may receive first audio data (e.g., one or more audio PDUs) from the electronic device 101 through the first audio communication link, based on the first parameter set determined through the ASE control according to the first service type.

In operation 2020, the external electronic device 700 (e.g., the processor 310) may receive a signal requesting service type switching to a second service type from the electronic device 101. In an embodiment, the signal may include a signal requesting to perform ASE control for the second service type.

In operation 2025, the external electronic device 700 (e.g., the processor 310) may determine (e.g., negotiate) a second parameter set (e.g., at least one of the parameters in <Table 1> and/or <Table 2>) for supporting the second service type by performing ASE control (e.g., the procedure of FIG. 25). In an embodiment, the external electronic device 700 (e.g., the processor 310) may obtain the second parameter set from the electronic device 101. In an embodiment, the second parameter set may be identified by a first ASE_ID that is the same as the first parameter set. In an embodiment, the second parameter set may be identified by a second ASE_ID different from that of the first parameter set. The external electronic device 700 (e.g., the processor 310) may perform ASE control using the same ASE_ID (e.g., the first ASE_ID) after the service type switching, or may perform ASE control using a new ASE_ID (e.g., the second ASE_ID) according to a method pre-agreed upon with the electronic device 101.

In an embodiment, the external electronic device 700 (e.g., the processor 310) may share with the electronic device 101 at least one label value indicating parameters preconfigured for each ASE state according to a pre-specified method, and may directly transition to the enabling state 1808 or the streaming state 1810 after receiving the specified label value from the electronic device 101, instead of going through the codec configured state 1704 and the QoS configured state 1706 while performing ASE control.

In operation 2030, when needed, the external electronic device 700 (e.g., the processor 310) may establish (e.g., create) a second audio communication link (e.g., a second CIS link) for the second service type. In an embodiment, the external electronic device 700 (e.g., the processor 120) may create the second audio communication link and couple the second parameter set to the second audio communication link. In an embodiment, operation 2030 may be skipped, and the external electronic device 700 (e.g., the processor 310) may couple the second parameter set to the first audio communication link to reuse the first audio communication link for the second service type. In an embodiment, the external electronic device 700 (e.g., the processor 310) may determine, through negotiation with the electronic device 101, whether to reuse the first audio communication link for the second service type or to establish the second audio communication link. In an embodiment, the external electronic device 700 (e.g., the processor 310) may reuse the first audio communication link for the second service type, or establish the second audio communication link, according to a pre-agreed method.

In operation 2035, the external electronic device 700 (e.g., the processor 310) may determine (e.g., negotiate) a start time for starting to apply the second service type using the second parameter set. In an embodiment, the external electronic device 700 (e.g., the processor 310) may obtain the start time from the electronic device 101. In an embodiment, the start time may include a specified time point (e.g., the start time of a specific ISO interval) on the first audio communication link or the second audio communication link. While performing at least one of operation 2020, operation 2030, or operation 2035, the external electronic device 700 (e.g., the processor 310) may continue to receive audio data through the first audio communication link according to the first parameter set. In an embodiment, while performing at least one of operation 2020, operation 2030, or operation 2035, the external electronic device 700 (e.g., the processor 310) may maintain an ASE streaming state (e.g., the streaming state 1810) for the first service type.

In operation 2040, the external electronic device 700 (e.g., the processor 310) may receive second audio data (e.g., one or more audio PDUs) from the electronic device 101 from the determined start time, based on the second parameter set according to the second service type. In an embodiment, the second audio data may be received through the first audio communication link or the second audio communication link. In an embodiment, the external electronic device 700 (e.g., the processor 310) may stop receiving the first audio data using the first parameter set after the determined start time.

In operation 2045, when the second audio communication link is used, the external electronic device 700 (e.g., the processor 310) may terminate (e.g., disconnect or release) the first audio communication link after the specified start time. In an embodiment, when the second audio communication link is established, the first audio communication link and the second audio communication link may exist redundantly until before the specified start time. In an embodiment, the first audio communication link may be maintained during a specified period after the specified start time. In an embodiment, the first audio communication link may be maintained during a specified period so that it may be reused after the specified start time.

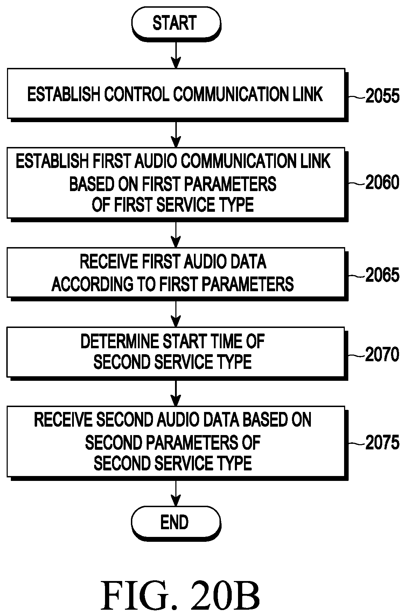

FIG. 20B is a flowchart illustrating a procedure of receiving an audio service by an external electronic device according to an embodiment. According to embodiments, at least one of the operations described below may be omitted, modified, or reordered. At least one of the operations described below may be performed by the processor (e.g., the processor 310) of the external electronic device 700.

Referring to FIG. 20B, in operation 2055, the external electronic device 700 (e.g., the processor 310) may establish (e.g., create) a control communication link with the electronic device 101. In an embodiment, the control communication link may be created based on Bluetooth communication (e.g., BLE). In an embodiment, the control communication link may include an ACL link based on BLE. In an embodiment, operation 2055 may include at least one of the operations of FIG. 4.

In an embodiment, operation 2055 may include an operation of providing the types of ASEs supported by the external electronic device 700 and the ASE_ID of each ASE to the electronic device 101 by the external electronic device 700 (e.g., the processor 310). In an embodiment, the external electronic device 700 (e.g., the processor 310) may autonomously transmit the ASE_ID of each ASE supported by the external electronic device 700 to the electronic device 101. In an embodiment, the external electronic device 700 (e.g., the processor 310) may receive a signal requesting at least one ASE supported by the external electronic device 700 from the electronic device 101, and transmit at least one ASE_ID supported by the external electronic device 700 to the electronic device 101 in response to the signal.

In operation 2060, the external electronic device 700 (e.g., the processor 310) may establish (e.g., create) a first audio communication link for receiving an audio service of a first service type from the electronic device 101, using the control communication link. In an embodiment, the first audio communication link may include a first CIS link. In an embodiment, operation 2060 may include at least one of the operations of FIG. 7.

In an embodiment, operation 2060 may include ASE control (e.g., the procedure of FIG. 25) for supporting the first service type according to the user's intention or a specified policy. In an embodiment, the external electronic device 700 (e.g., the processor 310) may perform the ASE control in response to a request from the electronic device 101 prior to establishing the first audio communication link. The ASE control may include an operation of determining (e.g., negotiating) a first parameter set (e.g., at least one of the parameters in <Table 1> and/or <Table 2>) identified by a first ASE_ID that may support the first service type in the at least one ASE_ID provided in operation 2005. In an embodiment, the first parameter set determined by the ASE control may be coupled to the first audio communication link.

In operation 2065, the external electronic device 700 (e.g., the processor 310) may receive first audio data (e.g., one or more audio PDUs) from the electronic device 101 through the first audio communication link, using the first parameter set determined through the ASE control according to the first service type.

In operation 2070, the external electronic device 700 (e.g., the processor 310) may determine (e.g., negotiate) a start time for applying the second service type using the second parameter set. In an embodiment, the external electronic device 700 (e.g., the processor 310) may obtain the start time from the electronic device 101. In an embodiment, the start time may include a specified time (e.g., the start time of a specific ISO interval) on the first audio communication link or the second audio communication link. While performing operation 2070, the external electronic device 700 (e.g., the processor 310) may continue to receive audio data through the first audio communication link according to the first parameter set. In an embodiment, while performing operation 2070, the external electronic device 700 (e.g., the processor 310) may maintain an ASE streaming state (e.g., the streaming state 1810) for the first service type.

In operation 2075, the external electronic device 700 (e.g., the processor 310) may receive second audio data (e.g., one or more audio PDUs) from the electronic device 101 from the determined start time, based on the second parameter set according to the second service type. In an embodiment, the second audio data may be received through the first audio communication link or the second audio communication link. In an embodiment, the external electronic device 700 (e.g., the processor 310) may stop receiving the first audio data using the first parameter set after the determined start time.

In an embodiment, when the second audio communication link is used, the external electronic device 700 (e.g., the processor 310) may terminate (e.g., disconnect) the first audio communication link after the specified start time.

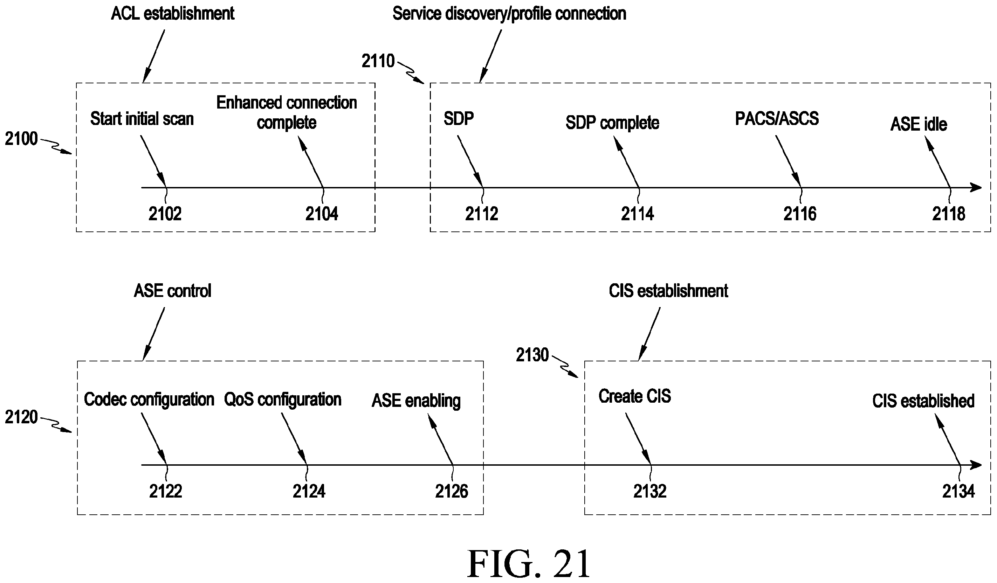

FIG. 21 is a diagram illustrating a procedure of preparing an audio service according to an embodiment.

Referring to FIG. 21, the procedure of preparing an audio service may include an ACL establishment operation 2100, a service discovery/profile connection operation 2110, an ASE control operation 2120, and a CIS establishment operation 2130. The ACL establishment operation 2100 may include initialization scan 2102 and connection completion 2104. After the initialization scan 2102 and the connection completion 2104, a control communication link (e.g., an ACL link) may be established between the electronic device 101 and the external electronic device 700. The service discovery/profile connection operation 2110 may include service discovery 2112 according to the service discovery protocol (SDP), service discovery completion 2114, PACS/ASCS initialization 2116, and ASE idle 2118. After the service discovery/profile connection operation 2110, the electronic device 101 and the external electronic device 700 may enter an ASE idle state (e.g., the idle state 1702 and the idle state 1802).

The ASE control operation 2120 may include codec configuration 2122, QoS configuration 2124, and ASE enabling 2126. In an embodiment, the codec configuration 2122 may include at least one of operations 2502, 2504, 2506, 2508, 2510, 2512, and 2514 of FIG. 25. In an embodiment, the QoS configuration 2124 may include at least one of operations 2516, 2518, 2520, 2522, 2524, 2526, and 2528 of FIG. 25. In an embodiment, the ASE enabling 2126 may include at least one of operations 2530, 2532, 2534, 2536, 2538, 2540, and 2542 of FIG. 25.

After the ASE control operation 2120, the electronic device 101 and the external electronic device 700 may enter an ASE enabling state (e.g., the enabling state 1708 and the enabling state 1808). The CIS establishment operation 2130 may include CIS creation 2132 and CIS establishment 2134. After the CIS establishment operation 2130, a CIS link may be established between the electronic device 101 and the external electronic device 700, and a parameter set (e.g., parameters for codec configuration, QoS configuration, and ASE enabling) determined through the ASE control operation 2120 may be associated with the CIS link.

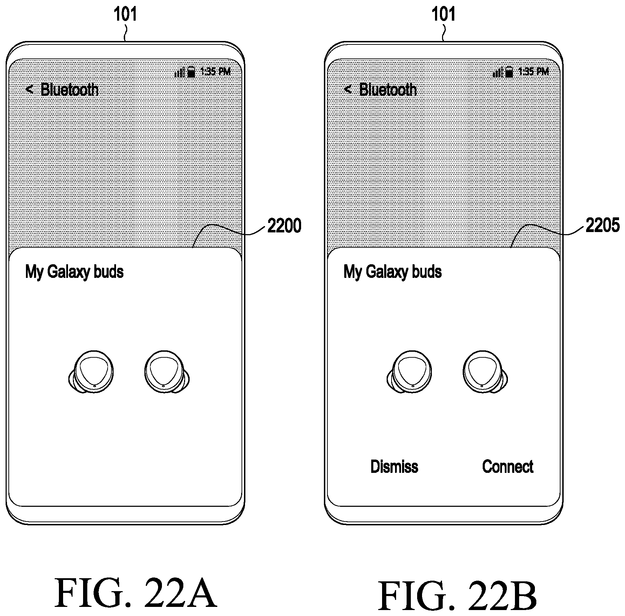

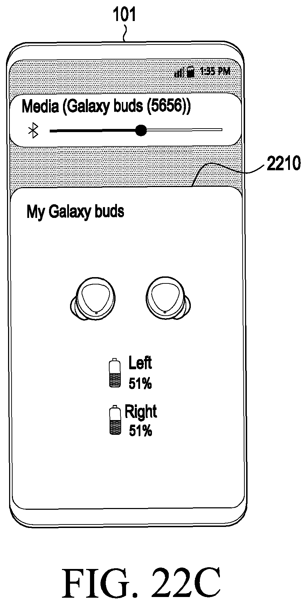

FIGS. 22A, 22B, and 22C illustrate various examples of a user interface displayed on the electronic device 101 according to an embodiment.

Referring to FIGS. 22A and 22B, the electronic device 101 may display a user interface 2200 or 2205 through the display module 160 based on information included in an advertising packet received from the external electronic device 700 (e.g., the first external electronic device 202 and/or the second external electronic device 204) and a configured condition. In an embodiment, the user interface 2200 or 2205 may include device recognition information, and the device recognition information may be information generated to correspond to a result of recognizing the external electronic device 102 by the electronic device 101. For example, the electronic device 101 may generate device recognition information indicating the model name (e.g., Galaxy Buds) of the external electronic device 102. In an embodiment, the device recognition information may indicate whether the external electronic device 102 has been previously paired with the electronic device 101, or may include a user account of the external electronic device 102. In an embodiment, the user interface 2205 may further include an input menu (e.g., "Dismiss" and "Connect") for receiving an input on whether to accept a connection to the external electronic device 102.

When FIG. 22C is included, the electronic device 101 may output a user interface 2210 for indicating the external electronic device 102 to the user based on an advertising packet received from the external electronic device 700 (e.g., the first external electronic device 202 and/or the second external electronic device 204) through the display module 160. The user interface 2210 may include at least one of an image representing the shape of the external electronic device 102 or text indicating the name of the external electronic device. In an embodiment, the user interface 2210 may further include an image indicating the remaining battery level (e.g., 51%) of the external electronic device 102.

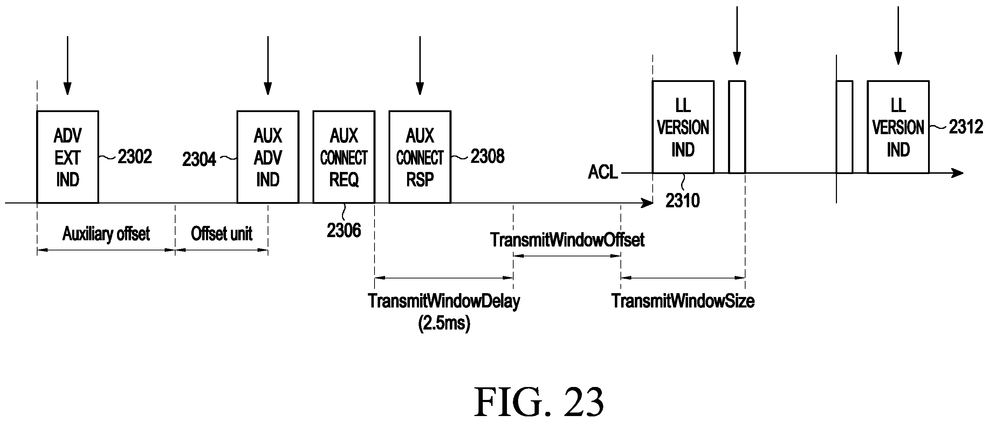

FIG. 23 is a diagram illustrating a procedure of communicating through an audio communication link by an electronic device according to an embodiment.

Referring to FIG. 23, the external electronic device 700 (e.g., the first external electronic device 202 or the second external electronic device 204) may transmit an advertising packet 2302 (e.g., ADV_EXT_IND) including advertising data through a primary advertising channel, and transmit an auxiliary advertising packet 2304 (e.g., AUX_ADV_IND) including extended advertising data through a secondary advertising channel. The external electronic device 700 may receive a connection request packet 2306 (e.g., AUX_CONNECT_REQ) from the electronic device 101 through the secondary advertising channel, and transmit a connection response packet 2308 (e.g., AUX_CONNECT_RSP) to the electronic device 101.

After transmitting the connection response packet 2308, the external electronic device 700 may receive a version indication packet 2310 (e.g., LL_VERSION _IND) including version information from the electronic device 101 and transmit a version indication packet 2312 including its version information to the electronic device 101, through a control communication link (e.g., an ACL link). The electronic device 101 and the external electronic device 700 may create the control communication link (e.g., the ACL link) by exchanging the packets of FIG. 23, and transmit and receive data packets through the control communication link. The electronic device 101 and the external electronic device 700 may create an audio communication link (e.g., a CIS link) using the control communication link to provide a high-quality audio service.

In an embodiment, after the external electronic device 700 creates the control communication link through the procedure of FIG. 23, it may expose various service characteristics, such as PACS and/or ASCS defined as a primary service, for performing the audio service. In an embodiment, the external electronic device 700 may transmit a service characteristic parameter indicating that it may play the audio sink role of a front left channel to the electronic device 101. In an embodiment, the external electronic device 700 may transmit ASE characteristics including an ASE state (e.g., one of the ASE states of FIG. 18) of the external electronic device 700 to the electronic device 101. For example, when the external electronic device 700 has completed only service discovery without requesting an audio service after establishing the control communication link with the electronic device 101, the external electronic device 700 may transmit ASE characteristics indicating the ASE idle state 1802 to the electronic device 101.

In an embodiment, the electronic device 101 and the external electronic device 700 may start the audio service as a first service type by the user's intention or a specified policy. In an embodiment, the first service type may indicate at least one of media, conversation, game, instructional, voice assistants, live, sound effects, notifications, ringtones, alerts, or emergency alarm. Each service type may require a different set of parameters, such as the presence or absence of two-way audio, a latency value, or a data rate.

The electronic device 101 may prepare the audio service by performing ASE control with the external electronic device 700. In an embodiment, the ASE control may include codec configuration (e.g., the codec configuration 2122). For example, the codec configuration 2122 may include an operation of transmitting a target latency to the external electronic device 700 and receiving a desired latency from the external electronic device 700 by the electronic device 101. In an embodiment, the ASE control may include the QoS configuration 2124. The QoS configuration 2124 may include an operation of determining at least one of an SDU interval, a frame format, or a physical layer transmission format (e.g., PHY) by the electronic device 101 and the external electronic device 700.

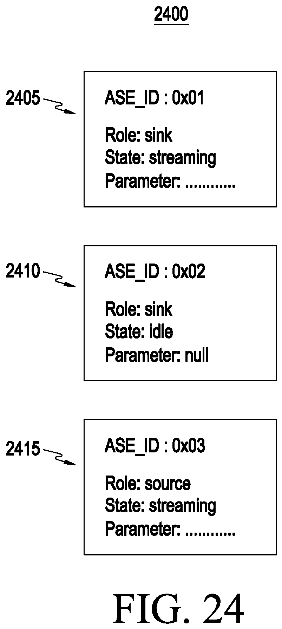

FIG. 24 illustrates an example of ASE information provided by an external electronic device according to an embodiment.

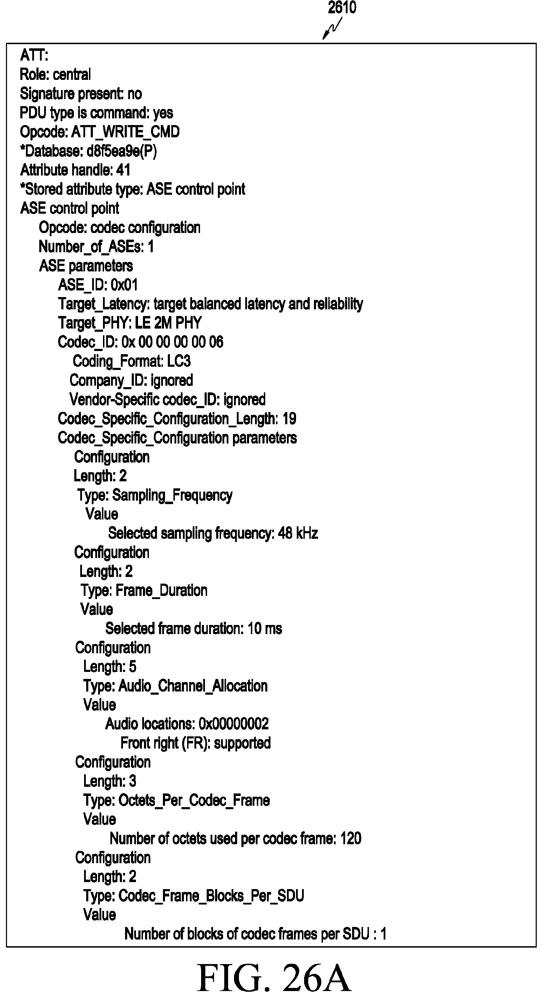

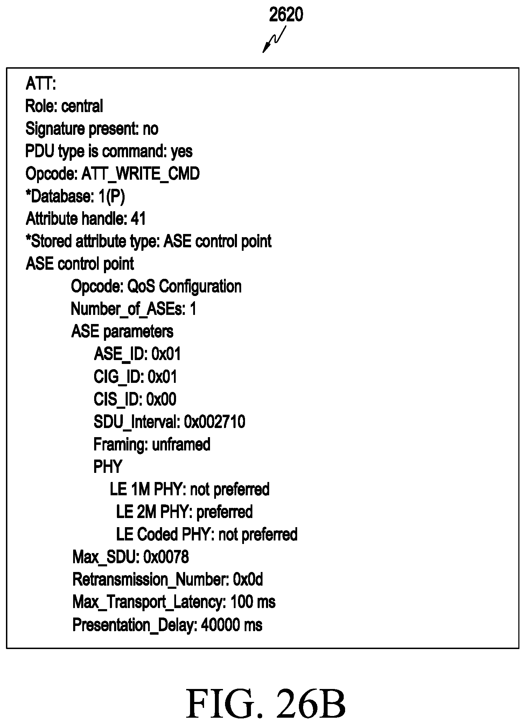

Referring to FIG. 24, the electronic device 101 and the external electronic device 700 may perform ASE control using ASE information 2400 provided by the external electronic device 700. For example, the external electronic device 700 may provide ASE information including first ASE information 2405, second ASE information 2410, and third ASE information 2415 to the electronic device 101. In an embodiment, the first ASE information 2405 may include ASE_ID: 0x01, Role: Sink ASE, State: Streaming, and Parameter (e.g., at least one of the parameters in FIGS. 26A and 26B). The second ASE information 2410 may include ASE_ID: 0x02, Role: Sink ASE, State: Idle, and Parameter (Null). The third ASE information 2415 may include ASE_ID: 0x03, Role: Source ASE, State: Streaming, and Parameter (e.g., at least one of the parameters in FIGS. 26A and 26B).

The electronic device 101 may perform ASE control using an ASE_ID according to a desired service type based on the ASE information 2400. For example, the electronic device 101 may perform ASE control using ASE_ID=0x01 and ASE_ID=0x03 for an audio service of a conversational type.

In an embodiment, it may be preconfigured or determined through negotiation that the electronic device 101 and the external electronic device 700 perform ASE control using an ASE_ID (e.g., ASE_ID=0x01 and/or ASE_ID=0x03) corresponding to a current streaming state during service type switching. In an embodiment, the electronic device 101 and the external electronic device 700 may pre-share a dummy ASE_ID to be used for service type switching. For example, the external electronic device 700 may provide the electronic device 700 with ASE information that includes "0x04: Dummy Sink ASE, Dummy 0x05: Source ASE" in addition to "0x01: Sink ASE, 0x2: Sink ASE, 0x03: Source ASE." The electronic device 101 and the external electronic device 700 may include software and/or hardware that stores "0x04: Dummy Sink ASE, Dummy 0x05: Source ASE."

FIG. 25 is a signal flow diagram illustrating an ASE control operation according to an embodiment. According to embodiments, at least one of the operations described below may be omitted, modified, or the order may be changed. In an embodiment, the processor 120 of the electronic device 101 may include an application processor (AP) 120a, and the wireless communication module 192 may include a Bluetooth (BT) chip 192a. At least one of the operations described below may be performed by the AP 120a and the BT chip 192a of the electronic device 101, and the processor 310 of the external electronic device 700.

Referring to FIG. 25, in operation 2502, the electronic device 101 (e.g., the AP 120a) may transmit a command packet (e.g., ATT_WRITE_CMD) including attribute information for codec configuration to the BT chip 192a. In an embodiment, ATT_WRITE_CMD may include an ASE_ID (e.g., ASE_ID=0x01) and attribute information (e.g., "Config Codec") for the codec configuration. In operation 2504, the electronic device 101 (e.g., the AP 120a) may receive the number of completed packets (e.g., "Number of Complete") from the BT chip 192a, thereby identifying that the BT chip 192a has normally received the ATT_WRITE_CMD.

In operation 2506, the electronic device 101 (e.g., the BT chip 192a) may transmit the ATT_WRIETE_CMD to the external electronic device 700. The external electronic device 700 may identify parameters (e.g., the parameters of <Table 1>) included in the attribute information for the codec configuration in response to the ATT_WRIETE_CMD. In operation 2508, the external electronic device 700 may transmit a notification packet (e.g., ATT_HANDLE_VALUE_NTF) indicating a response for the codec configuration to the electronic device 101. In an embodiment, the ATT_HANDLE_VALUE_NTF may include the ASE_ID (e.g., ASE_ID=0x01) and a response code (e.g., "Response_Code: Success") for the codec configuration. In operation 2510, the electronic device 101 (e.g., the BT chip 192a) may transmit the ATT_HANDLE_VALUE_NTF to the AP 120a.

In operation 2512, when needed, the external electronic device 700 may transmit a notification packet (e.g., ATT_HANDLE_VALUE_NTF) including attribute information of the codec configuration to the electronic device 101. In an embodiment, the ATT_HANDLE_VALUE_NTF may include the ASE_ID (e.g., ASE_ID=0x01) and attribute information (e.g., "Codec Configured" configured by the external electronic device 700 for the codec configuration. In operation 2514, the electronic device 101 (e.g., the BT chip 192a) may transmit the ATT_HANDLE_VALUE_NTF to the AP 120a. The electronic device 101 (e.g., the AP 120a) may complete the codec configuration through operations 2502, 2504, 2506, 2508, 2510, 2512, and 2514 and store the parameters (e.g., parameters of <Table 1>) of the codec configuration.

In operation 2516, the electronic device 101 (e.g., the AP 120a) may transmit a command packet (e.g., ATT_WRITE_CMD) including attribute information for the QoS configuration to the BT chip 192a. In an embodiment, the ATT_WRITE_CMD may include the ASE_ID (e.g., ASE _ID=0x01) and the attribute information (e.g., "Config QoS") for the QoS configuration. In operation 2518, the electronic device 101 (e.g., the AP 120a) may receive the number of completed packets (e.g., "Number of Complete") from the BT chip 192a, thereby identifying that the BT chip 192a has normally received the ATT_WRITE_CMD.

In operation 2520, the electronic device 101 (e.g., the BT chip 192a) may transmit the ATT_WRIETE_CMD to the external electronic device 700. In response to the ATT_WRIETE_CMD, the external electronic device 700 may identify parameters (e.g., the parameters of <Table 2>) included in the attribute information for the QoS configuration. In operation 2522, the external electronic device 700 may transmit a notification packet (e.g., ATT_HANDLE_VALUE_NTF) indicating a response for the QoS configuration to the electronic device 101. In an embodiment, the ATT_HANDLE_VALUE_NTF may include the ASE_ID (e.g., ASE_ID=0x01) and a response code (e.g., "Response_Code: Success") for the QoS configuration. In operation 2524, the electronic device 101 (e.g., the BT chip 192a) may transmit the ATT_HANDLE _VALUE_NTF to the AP 120a.

In operation 2526, when needed, the external electronic device 700 may transmit a notification packet (e.g., ATT_HANDLE _VALUE_NTF) including attribute information of the QoS configuration to the electronic device 101. In an embodiment, the ATT_HANDLE_VALUE_NTF may include the ASE_ID (e.g., ASE_ID=0x01 and attribute information (e.g., "QoS Configured") configured for the QoS configuration by the external electronic device 700. In operation 2528, the electronic device 101 (e.g., the BT chip 192a) may transmit the ATT_HANDLE_VALUE_NTF to the AP 120a. The electronic device 101 (e.g., the AP 120a) may complete the QoS configuration through operations 2516, 2518, 2520, 2522, 2524, 2526, and 2528 and store the parameters (e.g., the parameters of <Table 2>) of the QoS configuration.

In operation 2530, the electronic device 101 (e.g., the AP 120a) may transmit a command packet (e.g., ATT_WRITE_CMD) including attribute information for ASE enabling to the BT chip 192a. In an embodiment, the ATT_WRITE_CMD may include the ASE_ID (e.g., ASE_ID=0x01) and attribute information (e.g., "Enable") for ASE enabling. In operation 2532, the electronic device 101 (e.g., the AP 120a) may receive the number of completed packets (e.g., "Number of Complete") from the BT chip 192a, thereby identifying that the BT chip 192a has normally received the ATT_WRITE_CMD.

In operation 2534, the electronic device 101 (e.g., the BT chip 192a) may transmit the ATT_WRIETE_CMD to the external electronic device 700. The external electronic device 700 may identify that ASE enabling is indicated, in response to the ATT_WRIETE_CMD. In operation 2536, the external electronic device 700 may transmit a notification packet (e.g., ATT_HANDLE_VALUE_NTF) indicating ASE enabling to the electronic device 101. In an embodiment, the ATT_HANDLE_VALUE_NTF may include the ASE_ID (e.g., ASE_ID=0x01) and a response code (e.g., "Response_Code: Success") for the ASE enabling. In operation 2538, the electronic device 101 (e.g., the BT chip 192a) may transmit the ATT_HANDLE_VALUE_NTF to the AP 120a.

In operation 2540, when needed, the external electronic device 700 may transmit a notification packet (e.g., ATT_HANDLE_VALUE_NTF) including attribute information of the ASE enabling to the electronic device 101. In an embodiment, the ATT_HANDLE_VALUE_NTF may include the ASE_ID (e.g., ASE_ID=0x01) and attribute information (e.g., "Enabling") configured for the ASE enabling by the external electronic device 700. In operation 2542, the electronic device 101 (e.g., the BT chip 192a) may transmit the ATT_HANDLE_VALUE_NTF to the AP 120a. The electronic device 101 (e.g., the AP 120a) may enable the parameter sets (e.g., the parameters of <Table 1> and <Table 2>) of the codec configuration and the QoS configuration through operations 2530, 2532, 2534, 2536, 2538, 2540, and 2542. After the procedure of FIG. 25 is completed, the electronic device 101 and the external electronic device 700 may set the ASE state with ASE_ID=0x01 to the enabling state 1708 or 1808.

FIG. 26A illustrates parameters for codec configuration according to an embodiment.

Referring to FIG. 26A, a parameter set 2610 with ASE_ID=0x01 determined through codec configuration may include Target_Latency (e.g., target balanced latency and reliability), Target_PHY (e.g., LE 2M PHY), Codec_ID, and Codec_Specific_Configuration parameters. In an embodiment, the Codec_Specific_Configuration parameters may include at least one of a sampling frequency Sampling_Frequency, a frame duration Frame_Duration, an audio channel allocation Audio_Channel_Allocation, the number of octets per codec frame Octets_Per_Codec_Frame, or the number of blocks in a codec frame Codec_Frame_Blocks_Per_SDU.

FIG. 26B illustrates parameters for QoS configuration according to an embodiment.

Referring to FIG. 26B, a parameter set 2620 with ASE_ID=0x01 determined through QoS configuration may include at least one of CIG_ID, CIS _ID, SDU_Interval, Framed or Unframed, PHY, Max_SDU, Retransmission_Number RTN, Max_Transport_Latency MTL, and Presentation_Delay.

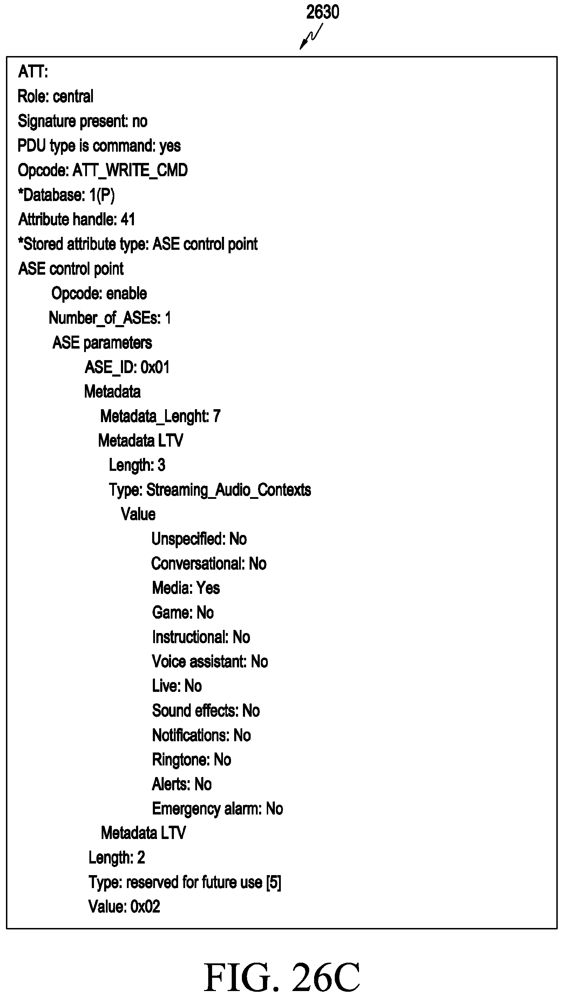

FIG. 26C illustrates parameters for ASE enabling according to an embodiment.

Referring to FIG. 26C, a parameter set 2630 with ASE_ID=0x01 determined through ASE enabling may include a streaming audio context indicating a supported service type. In an embodiment, the streaming audio context may indicate at least one service type of media, conversation, game, education, voice assistant, live, sound effect, notification, ringtone, alarm, or emergency alarm.

In an embodiment, upon completion of the codec configuration (e.g., operation 2122), the electronic device 101 and the external electronic device 700 may transition to the codec configured state 1704 or 1804. The electronic device 101 playing the central role may store the parameters (e.g., MTL and RTN) of the QoS configuration obtained from the external electronic device 700, after transitioning to the codec configured state 1704. After transitioning to the enabling state 1708, the electronic device 101 may transmit a link layer message (e.g., LL_CIS_REQ) of FIG. 7 related to CIS creation to the external electronic device 700, for creation of a first CIS link, and receive a response message (e.g., LL_CIS_RSP of FIG. 7) from the external electronic device 700.

In an embodiment, the link layer message may include one or more CIS parameters (e.g., the control data of FIG. 8). In an embodiment, the CIS parameters may be configured to be suitable for a service type (e.g., a first service type) configured through ASE control of the electronic device 101.

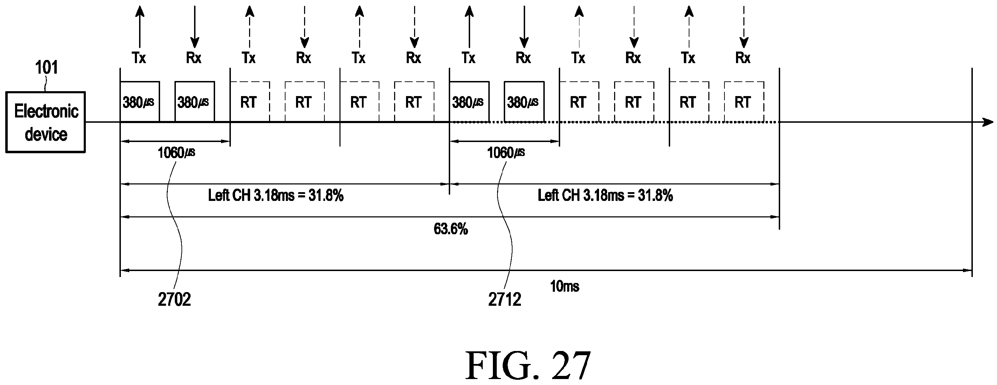

FIG. 27 is a diagram illustrating a first CIS link for a first service type according to an embodiment.

Referring to FIG. 27, the first service type may be a conversational type, and CIS parameters for the first service type may include Unframed, BN1, FT1, NSE3, ISO Interval 10ms, SDU Interval 10ms, Max SDU Size CtoP 80byte, Max SDU Size PtoC 80byte, and Sub Interval 1,060*µ*s. The electronic device 101 may exchange left audio packets of the conversational type with the first external electronic device 202, using a first sub-event 2702 of a 3.18-ms left channel and exchange right audio packets of the conversational type with the second external electronic device 204, using a first sub-event 2712 of a 3.18-ms right channel, within an ISO Interval of 10ms. The remaining sub-events of each channel may be used for retransmission. In an embodiment, when the first service type is the conversational type, each sub-event 2702 or 2712 may include a transmission time period (e.g., C to P) and a reception time period (e.g., P to C) of the same length, and include one or more retransmissions.

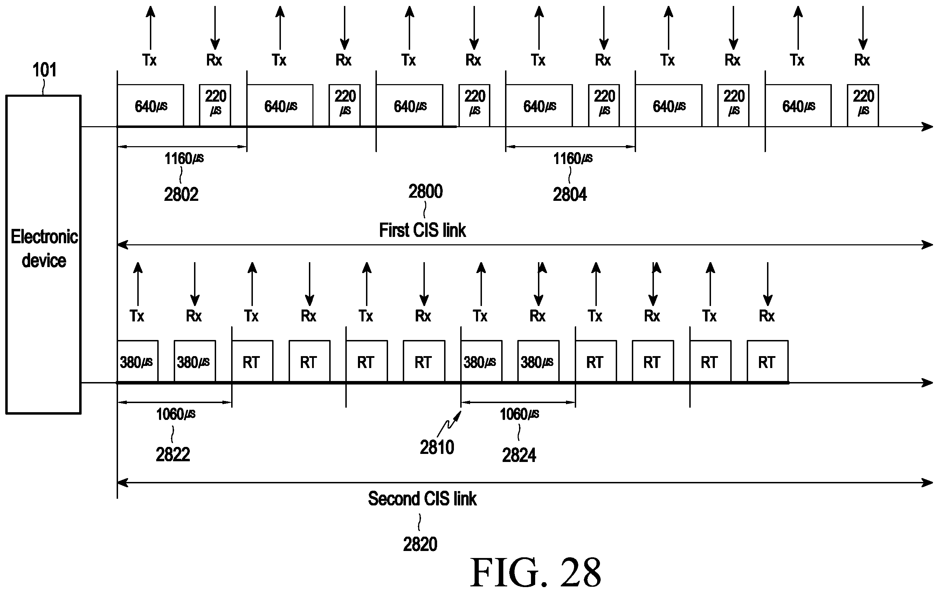

FIG. 28 is a diagram illustrating an operation time point of a new CIS link for a second service type according to an embodiment.

Referring to FIG. 28, the electronic device 101 may transmit audio data according to a first service type through a first CIS link 2800 at least until before a specified start time 2810. For example, the electronic device 101 may transmit audio data in a specified time period of the first CIS link 2800. In an embodiment, each sub-event (e.g., sub-events 2802 and 2804) of the first CIS link 2800 may be configured to include a relatively long transmission time period (e.g., C to P) and a relatively short reception time period (e.g., P to C) for the first service type (e.g., media type).

The electronic device 101 and the external electronic device 700 may generate a second CIS link 2820 different from the first CIS link 2800 to perform an audio service of a second service type. When the second CIS link 2820 is created, the second CIS link 2820 may be a virtual link until the specified start time 2810, and the electronic device 101 may not transmit audio data through the second CIS link 2820. In an embodiment, each sub-event (e.g., sub-events 2822 and 2824) of the second CIS link 2820 may be configured to include a transmission time period (e.g., C to P) and reception time period (e.g., P to C) of the same length for the second service type (e.g., conversational type).

The first CIS link 2800 and the second CIS link 2820 may exist redundantly until before the start time 2810, and the electronic device 101 may prepare to transmit audio data through the second CIS link 2820 from the start time 2810.

The electronic device 101 and the external electronic device 700 may negotiate to determine a time (e.g., the start time 2810) at which the audio service of the second service type starts. In an embodiment, the electronic device 101 may determine the start time 2810 and notify the external electronic device 700 of the start time 2810. In an embodiment, the electronic device 101 may determine the start time 2810 based on a proposal for the start time 2810 received from the external electronic device 700. In an embodiment, the electronic device 101 and the external electronic device 700 may determine the start time 2810 based on a specified criterion. The specified criterion may include, for example, at least one of service urgency (e.g., urgency for a service of the second service type), a wireless environment, a maximum transmission latency (MTL), a bit rate, or the number of devices connected to the electronic device 101 through an audio communication link.

In an embodiment, when the user's intention to switch the service type is clear (e.g., when a user input for switching the service type is received), the electronic device 101 may determine the start time 2810 as the nearest future time point (e.g., the start time of the nearest future ISO interval). In an embodiment, when the surrounding wireless environment is poor (e.g., when a received signal strength measured and reported by the external electronic device 700 is less than a threshold), the electronic device 101 may determine the start time 2810 as the farthest future time point (e.g., the start time of an ISO interval after a specified time).

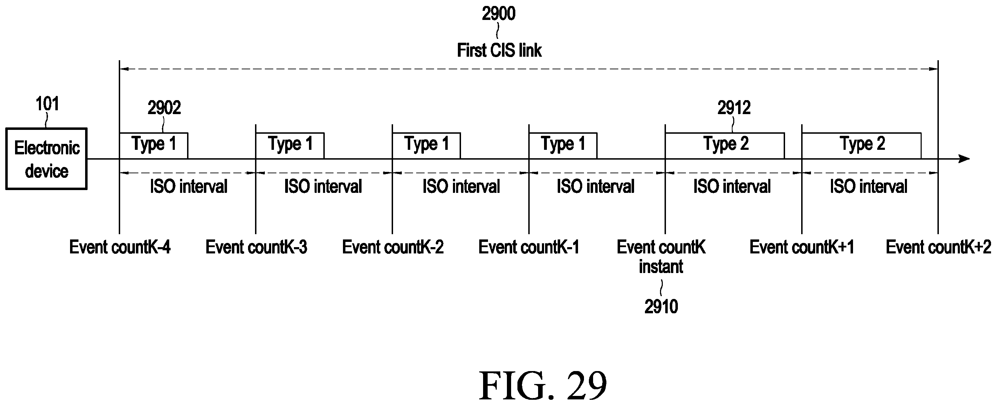

FIG. 29 is a diagram illustrating the start time of a second service type, when a first CIS link is reused according to an embodiment.

Referring to FIG. 29, the electronic device 101 may transmit audio data 2902 (e.g., "Type 1") according to parameters of a first service type to the external electronic device 700 through a first CIS link 2900. The electronic device 101 may determine parameters of a second service type through ASE control (e.g., codec configuration and/or QoS configuration), and determine a start time (e.g., a start time 2910) for starting to apply the parameters, while continuously transmitting the audio data 2902 through the first CIS link 2900.

In an embodiment, the electronic device 101 may determine service type switching at event count K-4, and determine event count K as the start time 2910. The electronic device 101 may start transmitting audio data 2912 (e.g., "Type 2") through the first CIS link 2900 from event count K according to the parameters of the second service type.

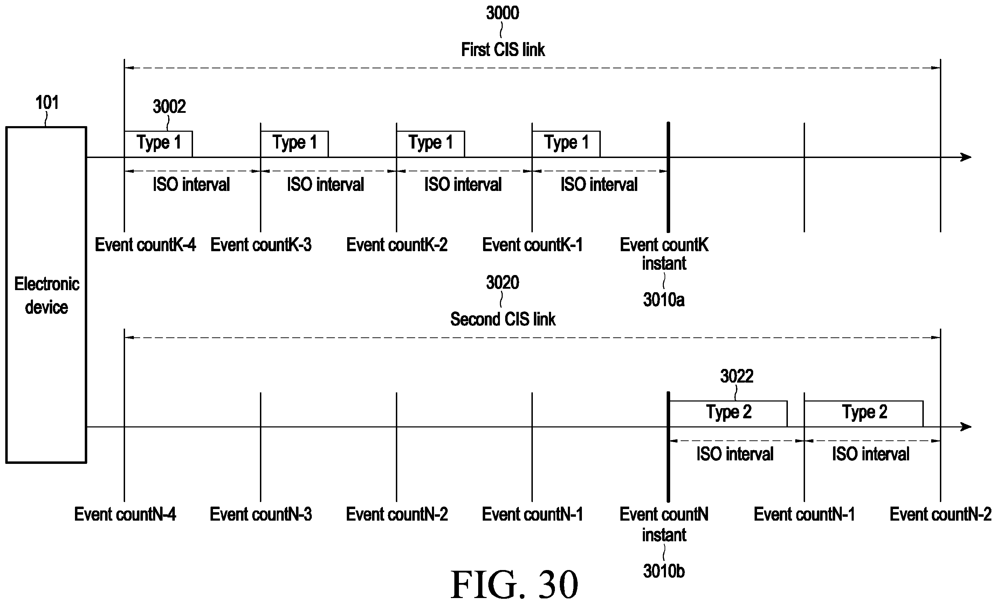

FIG. 30 is a diagram illustrating the start time of a second service type, when a second CIS link is created according to an embodiment.

Referring to FIG. 30, the electronic device 101 may transmit audio data 3002 (e.g., "Type 1") to the external electronic device 700 according to parameters of a first service type through a first CIS link 3000. The electronic device 101 may determine parameters of a second service type through ASE control (e.g., codec configuration and/or QoS configuration), create a second CIS link 3020, and determine a start time (e.g., a start time 3010b) for starting to apply the parameters, while continuously transmitting the audio data 3002 through the first CIS link 3000.

In an embodiment, the electronic device 101 may determine to switch the service type at event count K-4 of the first CIS link 3000, and determine the start time of event count N of the second CIS link 3020 as the start time 3010b. In an embodiment, the electronic device 101 may determine the start time 3010b by considering a time taken to prepare the parameters of the second service type. In an embodiment, the electronic device 101 may determine the start time 3010b after a specified time period (e.g., 4 events) from the time (e.g., event count K-4) at which the service type switching is determined. The electronic device 101 may start transmitting audio data 3022 (e.g., "Type 2") through the second CIS link 3020 from event count N according to the parameters of the second service type.

In an embodiment, the start time 3010b of event count N of the second CIS link 3020 may coincide with a start time 3010a of event count K of the first CIS link 3000. The electronic device 101 may stop transmitting audio through the first CIS link 3000 from the start time 3010a of event count K. In an embodiment, the electronic device 101 may disconnect the first CIS link 3000 at any time point after the start time 3010a.

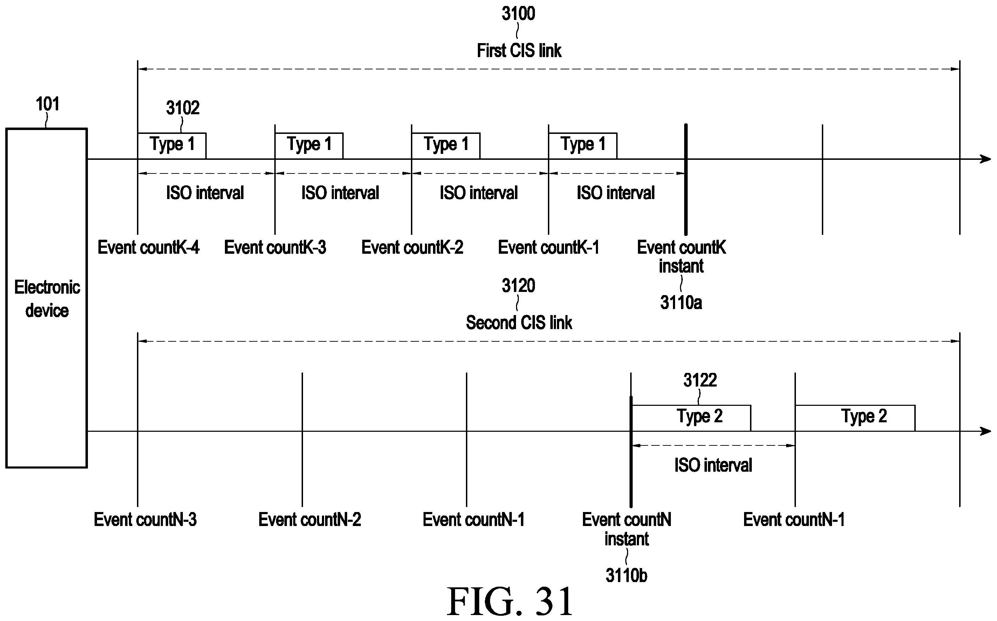

FIG. 31 is a diagram illustrating the start time of a second service type, when a second CIS link is created according to an embodiment.

Referring to FIG. 31, the electronic device 101 may transmit audio data 3102 (e.g., "Type 1") to the external electronic device 700 through a first CIS link 3100 according to parameters of a first service type. The electronic device 101 may determine parameters of a second service type through ASE control (e.g., codec configuration and/or QoS configuration), create a second CIS link 3120, and determine a start time (e.g., a start time 3110b) for starting to apply the parameters, while continuously transmitting the audio data 3102 through the first CIS link 3100. In an embodiment, an ISO interval of the second CIS link 3120 may have a different length and/or a different anchor point from an ISO interval of the first CIS link.

In an embodiment, the electronic device 101 may determine service type switching at event count K-4 of the first CIS link 3100, and determine the start time of event count N of the second CIS link 3120 as the start time 3110b. In an embodiment, the electronic device 101 may determine the start time 3110b by considering a time taken to apply the parameters of the second service type. In an embodiment, the electronic device 101 may determine the start time 3110b after a specified time period (e.g., 4 events) from the time (e.g., event count K-4) at which the service type switching is determined. The electronic device 101 may start transmitting audio data 3122 (e.g., "Type 2") through the second CIS link 3120 according to the parameters of the second service type from event count N.

In an embodiment, the start time 3110b of event count N of the second CIS link 3120 may be earlier than a start time 3110a of event count K of the first CIS link 3100. The electronic device 101 may stop the audio transmission through the first CIS link 3100 at the start time 3110a (e.g., event count K) of the first event after the start time 3110b of event count N of the second CIS link 3120. In an embodiment, the electronic device 101 may disconnect (e.g., release) the first CIS link 3100 immediately after or at any point after the start time 3110a.

In an embodiment, the electronic device 101 and the external electronic device 700 may perform an audio service of a second service type after a specified start time according to a pre-prepared audio communication link (e.g., a second CIS link) and parameters of the second service type. In an embodiment, the electronic device 101 and the external electronic device 700 may release an audio communication link (e.g., a first CIS link) and an ASE state related to the audio service of a first service type after the audio service of the second service type is started. In an embodiment, the electronic device 101 and the external electronic device 700 may deactivate (e.g., disable) the audio communication link (e.g., the first CIS link) and the AES state related to the audio service of the first service type after the audio service of the second service type is started.

The electronic device 101 according to embodiments may include the communication circuit 190, and at least one processor 120 functionally connected to the communication circuit. The at least one processor may be configured to establish a control communication link with the external electronic device 700. The at least one processor may be configured to establish a first audio communication link using first parameters of a first service type with the external electronic device, using the control communication link. The at least one processor may be configured to transmit first audio data to the external electronic device through the first audio communication link, using the first parameters. The at least one processor may be configured to determine second parameters of a second service type and a start time for applying the second parameters through the control communication link, while the first audio communication link is maintained. The at least one processor may be configured to transmit second audio data to the external electronic device through the second audio communication link, using the second parameters after the start time.

In an embodiment, the at least one processor may be configured to establish the second audio communication link including a connected isochronous stream CIS link different from a CIS link of the first audio communication link, before transmitting the second audio data, and release the first audio communication link after the start time, while the second audio communication link is maintained.

In an embodiment, the at least one processor may be configured to establish the second audio communication link including a second CIS link different from a first CIS link of the first audio communication link, and couple the second parameters to the second audio communication link.

In an embodiment, the at least one processor may be configured to determine the second parameters by performing at least one of a codec configuration operation, a QoS configuration operation, or an ASE enabling operation.

In an embodiment, the at least one processor may be configured to receive at least one piece of ASE information supported by the external electronic device through the control communication link, and determine the first parameters of the first service type, using at least one first ASE_ID included in the at least one piece of ASE information.

In an embodiment, the at least one processor may be configured to determine the second parameters of the second service type, using at least one second ASE ID.

In an embodiment, the at least one processor may be configured to determine the start time based on at least one of service urgency, a wireless environment, an MTL, a bit rate, or the number of devices connected to the electronic device 101.

The electronic device 700 according to an embodiment may include the communication circuit 320, and at least one processor 310 functionally connected to the communication circuit. The at least one processor may be configured to establish a control communication link with the external electronic device 101. The at least one processor may be configured to establish a first audio communication link using first parameters of a first service type with the external electronic device, using the control communication link. The at least one processor may be configured to receive first audio data from the external electronic device through the first audio communication link, using the first parameters. The at least one processor may be configured to obtain second parameters of a second service type and a start time for applying the second parameters from the external electronic device through the control communication link, while the first audio communication link is maintained. The at least one processor may be configured to receive second audio data from the external electronic device through the second audio communication link, using the second parameters after the start time.

In an embodiment, the at least one processor may be configured to establish the second audio communication link including a CIS link different from a CIS link of the first audio communication link before receiving the second audio data, and release the first audio communication link after the start time, while the second audio communication link is maintained.

In an embodiment, the at least one processor may be configured to establish the second audio communication link including a second CIS link different from a first CIS link of the first audio communication link, and couple the second parameters to the second audio communication link.

A method of operating the electronic device 101 may include establishing 1905 or 1955 a control communication link with the external electronic device 700. The method may include establishing 1910 or 1960 a first audio communication link using first parameters of a first service type with the external electronic device, using the control communication link. The method may include transmitting 1915 or 1965 first audio data to the external electronic device through the first audio communication link, using the first parameters. The method may include determining 1925, 1935, or 1970 second parameters of a second service type and a start time for applying the second parameters through the control communication link, while the first audio communication link is maintained. The method may include transmitting 1940 or 1975 second audio data to the external electronic device through the second audio communication link, using the second parameters after the start time.

In an embodiment, the method may further include establishing 1930 the second audio communication link including a CIS link different from a CIS link of the first audio communication link before transmitting the second audio data, and deleting 1945 the first audio communication link after the start time, while the second audio communication link is maintained.

In an embodiment, the method may include establishing 1930 the second audio communication link including a second CIS link different from a first CIS link of the first audio communication link, and coupling the second parameters to the second audio communication link.

In an embodiment, the second parameters may be determined through at least one of a codec configuration operation, a QoS configuration operation, or an ASE enabling operation.

In an embodiment, the method may include receiving at least one piece of ASE information supported by the external electronic device through the control communication link, and determining the first parameters of the first service type, using at least one first ASE_ID included in the at least one piece of ASE information.

In an embodiment, the second parameters may be determined using at least one second ASE ID.

In an embodiment, the start time may be determined based on at least one of service urgency, a wireless environment, an MTL, a bit rate, or the number of devices connected to the electronic device 101.

A method of operating the electronic device 700 according to an embodiment may include establishing 2005 or 2055 a control communication link with the external electronic device 101. The method may include establishing 2010 or 2060 a first audio communication link using first parameters of a first service type with the external electronic device, using the control communication link. The method may include receiving 2015 or 2065 first audio data from the external electronic device through the first audio communication link, using the first parameters. The method may include obtaining 2025 or 2070 second parameters of a second service type and a start time for applying the second parameters from the external electronic device through the control communication link, while the first audio communication link is maintained. The method may include receiving 2040 or 2075 second audio data from the external electronic device through the second audio communication link, using the second parameters after the start time.

In an embodiment, the method may further include establishing 2030 the second audio communication link including a CIS link different from a CIS link of the first audio communication link, before receiving the second audio data, and deleting 2045 the first audio communication link after the start time, while the second audio communication link is maintained.

In an embodiment, the method may include establishing 2030 the second audio communication link including a second CIS link different from a first CIS link of the first audio communication link, and coupling the second parameters to the second audio communication link.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1^{st}" and "2^{nd}", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
a communication circuit (190); and
at least one processor (120) functionally connected to the communication circuit,
wherein the at least one processor is configured to:
establish a control communication link with an external electronic device (700),
establish a first audio communication link using first parameters of a first service type with the external electronic device, using the control communication link,
transmit first audio data to the external electronic device through the first audio communication link, using the first parameters,
determine second parameters of a second service type and a start time for applying the second parameters through the control communication link, while the first audio communication link is maintained, and
transmit second audio data to the external electronic device through the second audio communication link, using the second parameters after the start time.

2. The electronic device of claim 1, wherein the at least one processor is configured to:
establish the second audio communication link including a connected isochronous stream (CIS) link different from a CIS link of the first audio communication link, before transmitting the second audio data, and
release the first audio communication link after the start time, while the second audio communication link is maintained.

3. The electronic device of claim 1, wherein the at least one processor is configured to:
establish the second audio communication link including a second CIS link different from a first CIS link of the first audio communication link, and
couple the second parameters to the second audio communication link.

4. The electronic device of any one of claims 1 to 3, wherein the at least one processor is configured to determine the second parameters by performing at least one of a codec configuration operation, a quality of service (QoS) configuration operation, or an audio stream endpoint (ASE) enabling operation.

5. The electronic device of any one of claims 1 to 4, wherein the at least one processor is configured to:
receive at least one piece of ASE information supported by the external electronic device through the control communication link, and
determine the first parameters of the first service type, using at least one first ASE ID included in the at least one piece of ASE information.

6. The electronic device of claim 5, wherein the at least one processor is configured to determine the second parameters of the second service type, using at least one second ASE ID.

7. The electronic device of any one of claims 1 to 6, wherein the at least one processor is configured to determine the start time based on at least one of service urgency, a wireless environment, a maximum transmission latency (MTL), a bit rate, or the number of devices connected to the electronic device (101).

8. An electronic device (700) comprising:
a communication circuit (320); and
at least one processor (310) functionally connected to the communication circuit,
wherein the at least one processor is configured to:
establish a control communication link with an external electronic device (101),
establish a first audio communication link using first parameters of a first service type with the external electronic device, using the control communication link,
receive first audio data from the external electronic device through the first audio communication link, using the first parameters,
obtain second parameters of a second service type and a start time for applying the second parameters from the external electronic device through the control communication link, while the first audio communication link is maintained, and
receive second audio data from the external electronic device through the second audio communication link, using the second parameters after the start time.

9. The electronic device of claim 8, wherein the at least one processor is configured to:
establish the second audio communication link including a CIS link different from a CIS link of the first audio communication link before receiving the second audio data, and
release the first audio communication link after the start time, while the second audio communication link is maintained.

10. The electronic device of claim 8, wherein the at least one processor is configured to:
establish the second audio communication link including a second CIS link different from a first CIS link of the first audio communication link, and
couple the second parameters to the second audio communication link.

11. A method of operating an electronic device (101), comprising:
establishing (1905; 1955) a control communication link with an external electronic device (700),
establishing (1910; 1960) a first audio communication link using first parameters of a first service type with the external electronic device, using the control communication link,
transmitting (1915; 1965) first audio data to the external electronic device through the first audio communication link, using the first parameters,
determining (1925, 1935; 1970) second parameters of a second service type and a start time for applying the second parameters through the control communication link, while the first audio communication link is maintained, and
transmitting (1940; 1975) second audio data to the external electronic device through the second audio communication link, using the second parameters after the start time.

12. The method of claim 11, further comprising:
establishing (1930) the second audio communication link including a CIS link different from a CIS link of the first audio communication link before transmitting the second audio data, and
deleting (1945) the first audio communication link after the start time, while the second audio communication link is maintained.

13. The method of claim 11, comprising:
establishing (1930) the second audio communication link including a second CIS link different from a first CIS link of the first audio communication link, and
coupling the second parameters to the second audio communication link,
wherein the second parameters are determined through at least one of a codec configuration operation, a quality of service (QoS) configuration operation, or an audio stream endpoint (ASE) enabling operation.

14. A method of operating an electronic device (700), comprising:
establishing (2005; 2055) a control communication link with an external electronic device (101),
establishing (2010; 2060) a first audio communication link using first parameters of a first service type with the external electronic device, using the control communication link,
receiving (2015; 2065) first audio data from the external electronic device through the first audio communication link, using the first parameters,
obtaining (2025; 2070) second parameters of a second service type and a start time for applying the second parameters from the external electronic device through the control communication link, while the first audio communication link is maintained, and
receiving (2040; 2075) second audio data from the external electronic device through the second audio communication link, using the second parameters after the start time.

15. The method of claim 14, further comprising:
establishing (2030) the second audio communication link including a CIS link different from a CIS link of the first audio communication link, before receiving the second audio data, and
deleting (2045) the first audio communication link after the start time, while the second audio communication link is maintained.
The method comprising:
establishing (2030) the second audio communication link including a second CIS link different from a first CIS link of the first audio communication link, and
coupling the second parameters to the second audio communication link.
